# EUROPÄISCHE PATENTSCHRIFT

(11) **EP 3 021 524 B1**
(45) Veröffentlichungstag und Bekanntmachung des Hinweises auf die Patenterteilung: **30.09.2020**
(21) Anmeldenummer: 15188524.1
(22) Anmeldetag: 06.10.2015
(51) Int. Cl.: H04L 29/06, H04L 29/08

(54) **VERFAHREN ZUM AUFBAU EINES LOKALEN STEUERUNGSKANALS ZWISCHEN EINEM STEUERUNGSGERÄT UND EINEM GEBÄUDEINTERNEN ZUGANGSPORTAL**
METHOD FOR ESTABLISHING A LOCAL CONTROL CHANNEL BETWEEN A CONTROL DEVICE AND AN ACCESS PORTAL WITHIN A BUILDING
PROCEDE DE REALISATION D'UN CANAL DE COMMANDE LOCAL ENTRE UN APPAREIL DE COMMANDE ET UN PORTAIL D'ACCES INTERNE AU BATIMENT

(30) Priorität: 11.11.2014 DE 102014113885
(43) Veröffentlichungstag der Anmeldung: 18.05.2016
(73) Patentinhaber: Deutsche Telekom AG, 53113 Bonn (DE)
(72) Erfinder: Hund, Martin, 56370 Rettert (DE); Unterschütz, Thomas, 64331 Weiterstadt (DE); Sinning, Thorsten, 52080 Aachen (DE); Hiller, Jochen, 89233 Neu-Ulm (DE)
(74) Vertreter: Nern, Peter-Michael

(56) Entgegenhaltungen:
- EP-A2- 2 634 970
- US-A1- 2010 099 382
- US-A1- 2012 109 384

## Beschreibung

Die vorliegende Erfindung betrifft ein Verfahren zum Aufbau eines lokalen Steuerungskanals zwischen einem Steuerungsgerät zur Steuerung zumindest einer gebäudeinternen elektrischen Komponente, welche an ein gebäudeinternes Zugangsportal angeschlossen ist, und dem gebäudeinternen Zugangsportal. Die vorliegende Erfindung betrifft ferner ein Zugangsportal für zumindest eine gebäudeinterne elektrische Komponente und ein Zugangssystem für ein gebäudeinternes Kommunikationsnetz sowie ein Verfahren zum Authentifizieren eines Steuerungsgeräts zur Steuerung zumindest einer gebäudeinternen elektrischen Komponente. Insbesondere bezieht sich die Erfindung auf das Gebiet der Heimautomation, insbesondere auf Gateways und Router zur Implementierung der Steuerung von Sensoren und Aktoren im Hausautomatisierungsumfeld.

Heutige Systeme zur Hausautomatisierung basieren häufig auf dem Konzept des "Haussteuerungs-Gateways", bei dem Anwendungen zur Hausautomatisierung bei einem Kunden zuhause, z.B. auf einem Haussteuerungs-Gateway betrieben werden. Die Anwendungen kommunizieren dabei lokal mit den Aktoren und Sensoren. Steuerungsgeräte, wie zum Beispiel Tablet PCs oder Smartphones steuern Anwendungen der Hausautomatisierungstechnik.

Steuerungsgeräte steuern die Anwendungen geografisch lokal, d.h., sie befinden sich zum Zeitpunkt der Steuerung gemeinsam mit dem Haussteuerungs-Gateway am selben Standort, also quasi "Zuhause". Die Steuerungsgeräte können Anwendungen aber auch von beliebigen anderen Standorten über das Internet fernsteuern. D.h. sie befinden sich zum Zeitpunkt der Steuerung außerhalb von "Zuhause".

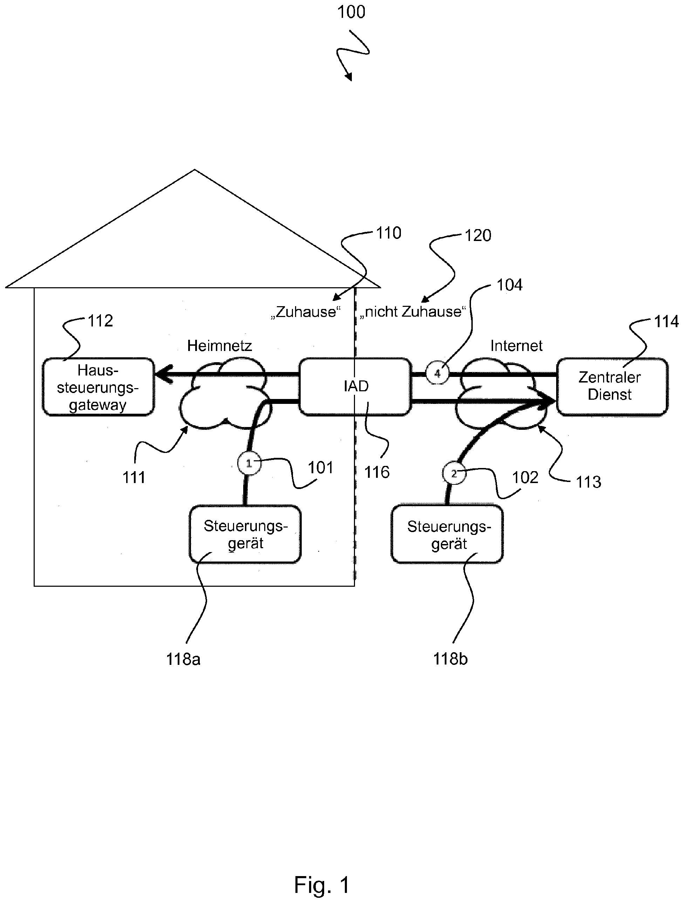

Fig. 1 zeigt eine schematische Darstellung der Topologie 100 eines Hausautomationsnetzes mit Kommunikation zwischen Haussteuerungs-Gateway 112 und Steuerungsgerät 118 über einen zentralen Dienst 114. Dort sind zwei Steuerungsgeräte 118a, 118b dargestellt, wobei das eine 118a sich innerhalb des "Zuhause" 110, das zweite 118b außerhalb des "Zuhause", d.h. im "nicht Zuhause" 120 befindet. Es könnte sich in der Abbildung auch um ein einziges Steuerungsgerät 118a, 118b handeln, das zwischen "Zuhause" 110 und "nicht Zuhause" 120 migriert.

Die Kommunikation des Steuerungsgeräts 118a "Zuhause" wird über den zentralen Dienst 114 geführt. In Fig. 1 ist das mit den Kommunikationsverbindungen "1", d.h. erste Kommunikationsverbindung 101, die vom Steuerungsgerät 118a über das Heimnetz 111 zum Internet Access Device (Internet Zugangs Gerät) 116 verläuft, und "4", d.h. vierte Kommunikationsverbindung 104, die von dem IAD 116 über das Internet 113 zum Zentralen Dienst 114 verläuft, dargestellt. Die Verknüpfung von zwei Teilverbindungen 101, 104 resultiert in einer verhältnismäßig langen Latenzzeit. Die Authentizität des Zugriffs wird durch den Zentralen Dienst 114 sichergestellt.

Die Authentifizierung durch den Zentralen Dienst 114 resultiert im Falle einer Unterbrechung der Verbindung zwischen dem Heimnetz 111 und dem Zentralen Dienst 114 in einem unbefriedigenden Nutzererlebnis. Der Nutzer kann dann weder lokal noch über den Zentralen Dienst 114, also weder über die erste Kommunikationsverbindung "1" 101 noch über die vierte Kommunikationsverbindung "4" auf das Haussteuerungs-Gateway 112 zugreifen.

Die Druckschrift EP 2 634 970 A2 betrifft einen Zugriff auf Ressourcen innerhalb eines lokalen Netzwerks, wobei auf einem in dem lokalen Netzwerk freigegebenen Netzlaufwerk die aktuelle Netzwerkadresse einer Netzwerkkomponente des lokalen Netzwerks abgelegt ist.

Die Druckschrift US 2010/0099382 A1 betrifft ein Hausgateway, das mit einem Mobiltelefonanschluss über ein IP Netzwerk verbunden ist, wobei das Hausgateway auf eine Anfrage des Mobiltelefonanschlusses einen Authentifizierungsprozess zum Authentifizieren des Mobiltelefonanschlusses ausführt.

Es ist die Aufgabe der vorliegenden Erfindung, ein Konzept für eine störungstolerante und schnell reagierende Steuerung eines Haussteuerungsgateways über ein Steuerungsgerät zu schaffen.

Diese Aufgabe wird durch die Merkmale der unabhängigen Ansprüche gelöst. Vorteilhafte Weiterbildungsformen sind Gegenstand der abhängigen Ansprüche.

Schon an dieser Stelle sei betont, dass der Begriff der Gebäudeautomation bzw. Gebäudeautomatisierung und damit der Datenaufnahme und Datenübertragung innerhalb eines Gebäudes oder Gebäudekomplexes nicht nur die Steuerung von Funktionen innerhalb eines Gebäudes umfasst, sondern sich ganz allgemein auf die Steuerung beliebiger Funktionalitäten und auf die Auslese jeglicher Sensoren innerhalb eines Gebäudes oder Gebäudekomplexes erstreckt. Das umfasst beispielsweise auch den Betrieb von Alarmanlagen und die Auslese biologischer Parameter von im Gebäude befindlichen Personen, insbesondere im Rahmen von Health-Care bzw. Gesundheitsfürsorge. Insbesondere umfasst die Gebäudeautomation auch Überwachungs-, Steuer-, Regel- und Optimierungseinrichtungen, bei denen alle Sensoren, Aktoren, Bedienelemente, Verbraucher und andere technische Einheiten miteinander vernetzt sind.

Die im Folgenden vorgestellten Verfahren und Systeme können zum Aufbau eines lokalen Steuerungskanals zwischen einem Steuerungsgerät, beispielsweise einem Steuerungsgerät 118a wie oben in Fig. 1 beschrieben, zur Steuerung einer gebäudeinternen elektrischen Komponente, welche an ein gebäudeinternes Zugangsportal angeschlossen ist, und dem gebäudeinternen Zugangsportal verwendet werden.

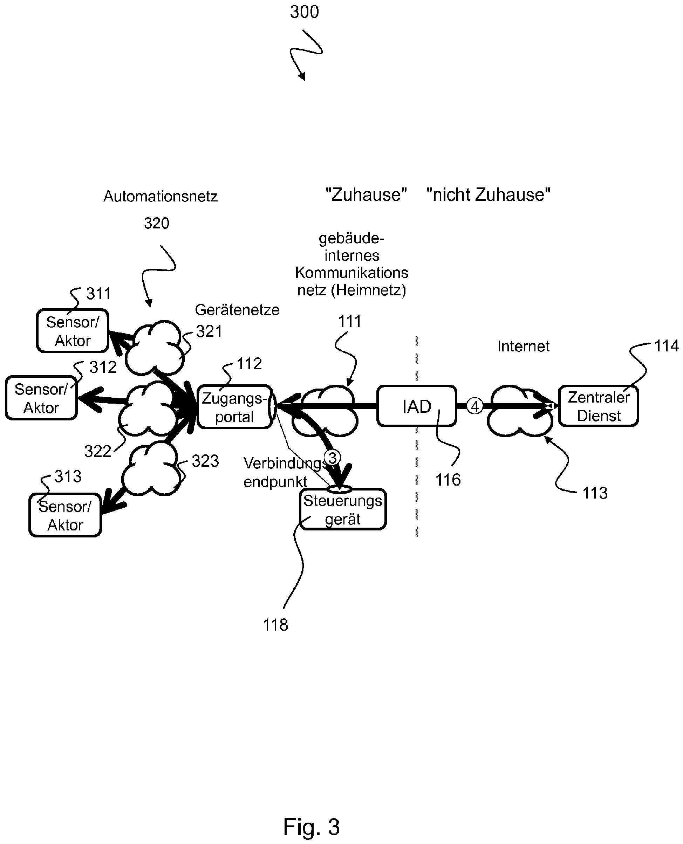

Ein gebäudeinternes Zugangsportal bezeichnet ein Zugangsportal für ein gebäudeinternes Automationsnetz, beispielsweise das oben in Fig. 1 beschriebene Haussteuerungs-Gateway, das über ein Automationsnetz umfassend eine oder mehrere Gerätenetze, wie in Fig. 3 dargestellt, Zugang zu einem oder mehreren Sensoren und/oder Aktoren gewährt. Ein gebäudeinternes Kommunikations- oder Automationsnetz bezeichnet dabei jedes Netz oder Netzwerk, das auf einen geographisch begrenzten, d.h. geographisch lokalen Bereich konzentriert ist und üblicherweise die Vernetzung eines Hauses, eines Gebäudes bzw. Gebäudekomplexes oder eines Unternehmens bezeichnet. Es muss sich nicht zwingenderweise um ein einziges Gebäude handeln, es kann sich auch auf eine Ansammlung von Gebäuden beziehen, die beispielsweise unter dem Dach einer Firma oder einer Firmengruppe zusammengefasst sind. Auch muss es sich nicht zwangsläufig um ein Gebäude im strengen Sinne handeln, auch freie Plätze und sonstige Lokalitäten, die mit einem für sie verfügbaren Kommunikationsnetz ausgestattet sind, beispielsweise Open-Air Theateraufführungen, Public-Viewing, etc. sollen in dieser Anmeldung unter den Begriff des Gebäudes fallen.

Das gebäudeinterne Kommunikationsnetz kann ein drahtgebundenes Netzwerk sein, beispielsweise unter Verwendung von Ethernet, USB, Kabel, etc. Das gebäudeinterne Kommunikationsnetz kann ein drahtloses Netzwerk sein, beispielsweise unter Nutzung von WLAN, WiFi, Bluetooth, Infrarot oder anderen Nahbereichskommunikationsstandards. Als Protokolle zur Datenübertragung über das gebäudeinterne Kommunikationsnetz können beispielsweise IPv4 oder IPv6 genutzt werden.

Das gebäudeinterne Automationsnetz kann ein drahtgebundenes Netzwerk sein, beispielsweise unter Verwendung von Ethernet PowerLAN etc. Das gebäudeinterne Automationsnetz kann ein drahtloses Netzwerk sein, beispielsweise unter Nutzung von ZigBee oder andere proprietäre oder standardisierte Nahbereichskommunikationsstandards.

Die o.g. Technologien (Ethernet, USB, Kabel, ...) und Protokolle (IPv4, IPv6, ...) der Kommunikationsnetze können auch für die Automationsnetze eingesetzt werden.

Ein gebäudeexternes Kommunikationsnetz bezeichnet ein Netz, das nicht dem gebäudeinternen Kommunikations- oder Automationsnetz angehört, beispielsweise das oben in Fig. 1 beschriebene Internet 113. Es kann sich beispielsweise um ein öffentliches Netz handeln, wie z.B. das Internet, ein Telefonnetz eines Telefonbetreibers, z.B. ein drahtgebundenes Netz, wie beispielsweise ein POTS, ISDN, DSL oder Kabel-Netz oder ein drahtloses Netz, wie beispielsweise ein Mobilfunknetz eines Mobilfunkbetreibers, z.B. ein zelluläres Netz, beispielsweise unter Verwendung eines Mobilfunkstandards wie z.B. LTE, UMTS, GSM, etc. Als Protokolle zur Datenübertragung über das gebäudeexterne Kommunikationsnetz können IPv4 oder IPv6 genutzt werden oder ATM, STM oder andere Weitverkehrsstandards.

Der gebäudeexterne Authentifizierungsserver des gebäudeexternen Kommunikationsnetzes, oder in Kurzform "Server" bezeichnet, kann ein Authentifizierungsserver sein, bei dem sich ein Gerät authentifizieren muss, um Zugang zu einem gebäudeinternen Kommunikations- oder Automationsnetz zu erlangen. Der Authentifizierungsserver kann über einen sogenannten "Zentralen Dienst" verfügen, beispielsweise wie oben in Fig. 1 als Zentraler Dienst 114 beschrieben, über den Authentifizierungsaufgaben durchgeführt werden. Der Authentifizierungsserver kann an beliebiger Stelle im Internet vorgehalten werden. Der Server kann ein virtueller Server sein.

Bei den im Folgenden vorgestellten Verfahren und Systemen kann die Authentifizierung anhand eines Credentials bzw. einer Zugangsberechtigung erfolgen. Eine Zugangsberechtigung bzw. Berechtigungsnachweis (englisch Credential) ist ein Mechanismus, der einem System die Identität eines Benutzers bestätigen soll. Dies geschieht meist in Form einer Benutzerkennung in Verbindung mit einem Authentifizierungsmerkmal. Ein Credential kann dazu eine geheime Zahl mit mehreren Ziffern umfassen.

Der Server kann in der Cloud vorgesehen sein. Unter Cloud bzw. Cloud Computing ist hier der Ansatz zu verstehen, abstrahierte IT-Infrastrukturen wie beispielsweise Rechenkapazität, Datenspeicher, Netzwerkkapazitäten, fertige Software oder hier den Server dynamisch an den Bedarf angepasst über ein Netzwerk zur Verfügung zu stellen. Die zur Verfügung gestellte abstrahierte IT-Infrastruktur wird auch als Cloud bzw. "Wolke" bezeichnet. Definierte technische Schnittstellen und Protokolle können Angebot und Nutzung dieser Dienstleistungen definieren.

Eine gebäudeinterne elektrische Komponente beschreibt eine Einheit, Funktionseinheit oder Instanz in einem gebäudeinternen Kommunikationsnetzwerk oder Gebäudeautomationsnetzwerk. Eine gebäudeinterne elektrische Komponente kann Signale von dem gebäudeinternen Kommunikations- oder Automationsnetzwerk empfangen und/oder Signale in das gebäudeinterne Kommunikations- oder Automationsnetzwerk senden. Eine gebäudeinterne elektrische Komponente kann beispielsweise ein Aktor oder Sensor sein, der über ein Modem, eine Netzwerkkarte, einen Netzwerkabschluss oder einen Netzwerkadapter verfügt. Eine gebäudeinterne elektrische Komponente kann Hardware und/oder Software umfassen, um die technischen Funktionen der gebäudeinternen elektrischen Komponente zu realisieren.

Eine gebäudeinterne elektrische Komponente kann Mikroprozessoren, Mikrochips, ASICs und/oder DSPs umfassen.

Die im Folgenden vorgestellten Verfahren und Systeme können von verschiedener Art sein. Die einzelnen beschriebenen Elemente können durch Hardware- oder Softwarekomponenten realisiert sein, beispielsweise elektronische Komponenten, die durch verschiedene Technologien hergestellt werden können und zum Beispiel Halbleiterchips, ASICs, Mikroprozessoren, digitale Signalprozessoren, integrierte elektrische Schaltungen, elektrooptische Schaltungen und/oder passive Bauelemente umfassen.

Die im Folgenden vorgestellten Verfahren und Systeme können in Zugangsportalen, Steuerungsgeräten und gebäudeinternen elektrischen Komponente gebäudeinterner Kommunikations- und Automationsnetze eingesetzt werden.

Ein Zugangsportal ist eine Netzwerkentität, die den Zugang von außen auf ein gebäudeinternes Kommunikations- oder Automationsnetzwerk steuert. Das Zugangsportal kann als Gateway oder Hub realisiert sein, es kann auch Router-Funktionalitäten umfassen oder selbst als Router realisiert sein. Eine gebäudeinterne elektrische Komponente bezeichnet eine Komponente dieses gebäudeinternen Netzes. Es kann sich dabei beispielsweise um einen steuerbarer Aktor handeln, beispielsweise ein Stellglied für Heizung, Jalousien, Alarmanlage, Türschloss, Lichtschalter, Herd, Kühlschrank, Waschmaschine, Kaffeemaschine, Geschirrspülmaschine oder um einen steuerbaren Sensor, beispielsweise einen Temperaturfühler, einen Drucksensor, einen Lichtsensor, eine Lichtschranke, eine Uhr oder Armbanduhr oder eine Brille mit Sensorfunktion. Das Stellglied oder Sensor kann auch ein in den Körper implantierter Chip sein, wie er von der Haltung von Haustieren bekannt ist.

Aspekte der Erfindung basieren auf dem Konzept, effiziente Verbindungswege zwischen einem Heimautomationssystem wie in Fig. 1 dargestellt und einem Fernsteuergerät bzw. Steuerungsgerät 118a, 118b wie oben in Fig. 1 beschrieben zur Bedienung des Heimautomationssystems ohne Kenntnis des Aufenthaltsortes des Fernsteuergerätes 118a, 118b und unabhängig von der Etablierung einer gemeinsamen physikalischen Funkverbindung zu schaffen.

Dazu kommuniziert das Steuerungsgerät lokal und direkt mit dem Haussteuerungs-Gateway, um so die Latenzzeit zu minimieren. Die Geräte bauen einen lokalen Kommunikationskanal bzw. Steuerungskanal zueinander auf. Im Haussteuerungs-Gateway kann dafür zu jedem Steuerungsgerät des Heimautomationssystems die Herkunftsadresse und ein Credential, d.h. eine Zugangsberechtigung zur Authentifizierung des Steuerungsgeräts gegenüber dem Haussteuerungs-Gateway hinterlegt werden. Durch den Abgleich der Daten kann das Haussteuerungs-Gateway erkennen, ob ein Fernbedienungsgerät oder Steuergerät sich lokal im Bereich des Firewall-geschützten Bereichs des Heimautomationssystems befindet und kann fallweise eine lokale Verbindung über das Heimnetz oder eine globale Verbindung über das Internet erstellen. Insbesondere wird dazu aber sichergestellt, dass ein Steuerungsgerät in den Besitz der Adresse des Verbindungsendpunkts des Zugangsportals bzw. Haussteuerungs-Gateways kommt. Die Authentizität des nutzenden Geräts wird sichergestellt, insbesondere wird die Authentizität lokal und global, einmalig und homogen sichergestellt. Lokal heißt in diesem Zusammenhang, dass das Steuerungsgerät eine Authentifizierung lokal am Haussteuerungs-Gateway vornehmen kann. Global heißt in diesem Zusammenhang, dass der Nutzer eine Authentifizierung am Zentralen Dienst vornehmen kann. Einmalig heißt in diesem Zusammenhang, dass eine globale Authentifizierung lokal gültig ist. Eine erneute Eingabe von z.B. Credentials bzw. Zugangsberechtigung ist auf dem Haussteuerungs-Gateway nicht nötig. Homogen heißt in diesem Zusammenhang, dass die Implementierung sowohl bei der globalen Authentifizierung als auch bei der lokalen Authentifizierung dieselben Mechanismen verwendet. Dies garantiert die Einfachheit der Implementierung. Die Einfachheit der Implementierung wird durch das Bereitstellen einer geeigneten Schnittstelle gewährleistet.

Authentifiziert werden können sowohl Steuerungsgeräte als auch deren Nutzer. Im Folgenden wird der Einfachheit halber davon ausgegangen, dass es das Steuerungsgerät ist, das sich anstelle des Nutzers authentifiziert. Die Authentifizierung eines Nutzers anstelle des Gerätes stellt eine Ausführungsvariante dar.

Gemäß einem ersten Aspekt betrifft die Erfindung ein Verfahren zum Aufbau eines lokalen Steuerungskanals zwischen einem Steuerungsgerät zur Steuerung zumindest einer gebäudeinternen elektrischen Komponente, welche an ein gebäudeinternes Zugangsportal angeschlossen ist, und dem gebäudeinternen Zugangsportal, mit: Authentifizierung des Steuerungsgerätes gegenüber einem gebäudeexternen Authentifizierungsserver über ein gebäudeexternes Kommunikationsnetzwerk; Übermitteln einer Netzwerkadresse des gebäudeinternen Zugangsportals durch den gebäudeexternen Authentifizierungsserver an das Steuerungsgerät bei erfolgreicher Authentifizierung des Steuerungsgerätes gegenüber dem gebäudeexternen Authentifizierungsserver über das gebäudeexterne Kommunikationsnetzwerk; Übermitteln einer Zugangsberechtigung zum Zugriff auf das gebäudeinterne Zugangsportal an das Steuerungsgerät durch den gebäudeexternen Authentifizierungsserver über das gebäudeexterne Kommunikationsnetzwerk bei erfolgreicher Authentifizierung des Steuerungsgerätes gegenüber dem gebäudeexternen Authentifizierungsserver über das gebäudeexterne Kommunikationsnetzwerk; und Aufbauen des lokalen Steuerungskanals zwischen dem Steuerungsgerät und dem gebäudeinternen Zugangsportal ansprechend auf den Empfang der Netzwerkadresse des gebäudeinternen Zugangsportals und der Zugangsberechtigung.

Dies hat den Vorteil, dass die Latenzzeit zur Steuerung einer elektrischen Komponente des gebäudeinternen Kommunikationsnetzes durch das Steuerungsgerät sehr kurz ist, da der Steuerungskanal lokal aufgebaut wird. Der Anwender hat das Gefühl, dass ein auf dem Steuerungsgerät initiierter Schaltvorgang unmittelbar umgesetzt wird. Der Vorgang des Einschaltens einer Lampe beispielsweise wird unmittelbar von dem Vorgang des Schaltens des Stromkreises für das Licht gefolgt.

Ferner ist die Authentizität des Nutzers gewährleistet, der das Steuerungsgerät bedient. Der Anwender kann sicher sein, dass nur er selber bzw. nur ein bestimmter Nutzerkreis autorisiert ist, Anwendungen zu steuern.

Gemäß einer Ausführungsform des Verfahrens ist die zumindest eine gebäudeinterne elektrische Komponente ein steuerbarer Aktor oder ein steuerbarer Sensor.

Dies hat den Vorteil, dass steuerbare Aktoren oder steuerbare Sensoren unmittelbar über den lokalen Steuerungskanal angesteuert werden können, so dass der Nutzer des Steuerungsgeräts nach der Eingabe eines Befehls sofort ein Resultat erkennt, beispielswiese dass der Aktor eine Aktion ausführt oder dass der Sensor gemessene Daten liefert.

Gemäß einer Ausführungsform des Verfahrens ist der steuerbare Aktor ein Stellglied für eines insbesondere der folgenden Geräte: Heizung, Jalousien, Alarmanlage, Türschloss, Lichtschalter, Herd, Kühlschrank, Waschmaschine, Kaffeemaschine, Geschirrspülmaschine.

Dies hat den Vorteil, dass bei Ansteuerung über den lokalen Steuerungskanal die jeweiligen Geräte sofort reagieren, d.h. Heizung springt sofort an, Jalousien schließen sich unmittelbar, etc. Außerdem ist das Verfahren ausfalltolerant, da die Ansteuerung über den lokalen Steuerungskanal unabhängig vom Zustand des gebäudeexternen Netzes ist.

Gemäß einer Ausführungsform des Verfahrens ist der steuerbare Sensor ein Temperaturfühler, ein Drucksensor, ein Lichtsensor oder eine Lichtschranke.

Dies hat den Vorteil, dass bei Ansteuerung über den lokalen Steuerungskanal die jeweiligen Geräte sofort reagieren, d.h. Temperaturfühler liefert unmittelbar gemessene Temperaturwerte, Drucksensor liefert unmittelbar gemessenen Druck, etc.

Gemäß einer Ausführungsform des Verfahrens werden die Netzwerkadresse und die Zugangsberechtigung gleichzeitig oder nacheinander übermittelt.

Dies hat den Vorteil, dass bei gleichzeitiger Übermittlung der Netzwerkadresse und der Zugangsberechtigung die Übermittlung in einer Nachricht erfolgen kann und damit die Verzögerung zum Aufbau des Steuerungskanals reduziert wird. Eine Übermittlung nacheinander hat den Vorteil, dass Netzwerkadresse und Zugangsberechtigung unabhängig voneinander übermittelt werden können und das Verfahren so abhörsicherer ist.

Gemäß einer Ausführungsform umfasst das Verfahren ein Einrichten einer Zuordnung zwischen dem Steuerungsgerät und dem Zugangsportal in dem gebäudeexternen Authentifizierungsserver basierend auf einer Freigabe des Steuerungsgeräts, die an das gebäudeinterne Zugangsportal angeschlossene gebäudeinterne elektrische Komponente zu steuern.

Dies hat den Vorteil, dass nur Steuerungsgeräte, die in dem gebäudeexternen Authentifizierungsserver über die Zuordnung registriert sind, die gebäudeinterne(n) elektrische(n) Komponente(n) steuern dürfen. Dies macht das Verfahren sicher gegenüber unberechtigter Ansteuerung.

Gemäß einer Ausführungsform umfasst das Verfahren ein Steuern der an das gebäudeinterne Zugangsportal angeschlossenen zumindest einen gebäudeinternen elektrischen Komponente durch das Steuerungsgerät über den aufgebauten lokalen Steuerungskanal.

Dies hat den Vorteil, dass das Steuern der gebäudeinternen elektrischen Komponente über den lokalen Steuerungskanal sicher ist und schnell anspricht.

Gemäß einer Ausführungsform umfasst das Verfahren ein Steuern der an das gebäudeinterne Zugangsportal angeschlossenen zumindest einen gebäudeinternen elektrischen Komponente durch das Steuerungsgerät über den aufgebauten lokalen Steuerungskanal unter Umgehung des gebäudeexternen Kommunikationsnetzes.

Dies hat den Vorteil, dass bei Umgehung des gebäudeexternen Kommunikationsnetzes ein Ausfall oder eine Beeinträchtigung dieses Netzes keinen Einfluss auf die Steuerbarkeit der elektrischen Komponenten des gebäudeinternen Netzes hat. Das Verfahren ist damit unabhängig vom Zustand des gebäudeexternen Kommunikationsnetzes.

Gemäß einer Ausführungsform des Verfahrens ist die Netzwerkadresse des gebäudeinternen Zugangsportals eine IP Adresse, insbesondere eine IP Adresse der Version IPv4 oder IPv6.

Dies hat den Vorteil, dass ein Standard IP Stack bei dem Verfahren eingesetzt werden kann, welcher überall verfügbar ist. Dies spart Entwicklungsaufwand.

Gemäß einer Ausführungsform des Verfahrens liegt die Netzwerkadresse des gebäudeinternen Zugangsportals im Adressraum oder im Adresssubraum des gebäudeinternen Kommunikationsnetzes.

Dies hat den Vorteil, dass Standardprotokolle wie IPv4 oder IPv6 eingesetzt werden können, um die Verbindung aufzubauen.

Gemäß einer Ausführungsform umfasst das Verfahren ein Übermitteln der Netzwerkadresse und der Zugangsberechtigung des gebäudeinternen Zugangsportals durch das gebäudeinterne Zugangsportal an den gebäudeexternen Authentifizierungsserver; und ein Speichern einer Zuordnung zwischen einer Identität des gebäudeinternen Zugangsportals und der übermittelten Netzwerkadresse und Zugangsberechtigung des gebäudeinternen Zugangsportals in einem Speicher des gebäudeexternen Authentifizierungsserver, insbesondere in Form einer Tabelle.

Dies hat den Vorteil, dass der Authentifizierungsserver die Berechtigung eines Steuerungsgeräts in einfacher Weise, d.h. schnell nachprüfen kann, indem er überprüft, ob eine Zuordnung zu einem Zugangsportal existiert.

Gemäß einer Ausführungsform des Verfahrens ist das gebäudeinterne Zugangsportal ein Gateway, insbesondere ein Hausautomatisierungs-Gateway, ein Gateway mit Router-Funktionalität oder ein Router.

Ein Gateway hat den Vorteil, dass ein Gateway bereits jetzt in vielen Heimnetzen eingesetzt wird, so dass das Verfahren in diesen Umgebungen direkt eingesetzt werden kann. Ein Gateway mit Router-Funktionalität oder ein Router hat den Vorteil, dass damit komplexere Steuerungsaufgaben realisiert werden können.

Gemäß einer Ausführungsform des Verfahrens gewährt das gebäudeinterne Zugangsportal Zugang zu einem insbesondere der folgenden gebäudeinternen Netze: Gebäudeautomatisierungsnetz, Hausautomationsnetz, Industrieautomatisierungsnetz, Smart Home Netz, Smart Metering Netz, Haushaltsgeräteautomationsnetz, Unterhaltungselektronikautomationsnetz, Internet der Dinge, Internet of things.

Dies hat den Vorteil, dass das Verfahren bei einer Vielzahl von Netzen, wie oben beispielhaft angegeben, einsetzbar ist um diese Netze schnell und sicher anzusteuern.

Gemäß einer Ausführungsform des Verfahrens ist das gebäudeexterne Kommunikationsnetz das Internet.

Dies hat den Vorteil, dass das Internet allen Orts verfügbar ist.

Gemäß einer Ausführungsform erfolgt die Authentifizierung des Steuerungsgeräts gegenüber dem gebäudeexternen Authentifizierungsserver zuerst über ein gebäudeinternes Kommunikationsnetz und danach über das gebäudeexterne Kommunikationsnetz.

Gemäß einem zweiten Aspekt betrifft die Erfindung ein Zugangsportal für zumindest eine gebäudeinterne elektrische Komponente, welche an das Zugangsportal angeschlossen ist, umfassend: eine Zugangsinformationsseinheit, die ausgelegt ist, eine Netzwerkadresse des gebäudeinternen Zugangsportals und eine Zugangsberechtigung für das gebäudeinterne Zugangsportal bei einem Authentifizierungsserver eines gebäudeexternen Kommunikationsnetzes zu hinterlegen; und eine Kommunikationsschnittstelle, die ausgelegt ist, ansprechend auf eine Anfrage eines Steuerungsgeräts zur Steuerung der zumindest einen gebäudeinternen elektrischen Komponente einen lokalen Steuerungskanal zu dem Steuerungsgerät aufzubauen, falls die Anfrage die in dem Authentifizierungsserver hinterlegte Zugangsberechtigung umfasst.

Dies hat den Vorteil, dass ein solches Zugangsportal ermöglicht, einen lokalen Steuerungskanal aufzubauen, um damit die Latenzzeit zur Steuerung einer elektrischen Komponente des gebäudeinternen Kommunikationsnetzes durch das Steuerungsgerät sehr kurz zu halten. Der Anwender hat somit das Gefühl, dass ein auf dem Steuerungsgerät initiierter Schaltvorgang über das Zugangsportal unmittelbar umgesetzt wird. Der Vorgang des Einschaltens einer Lampe beispielsweise wird unmittelbar von dem Vorgang des Schaltens des Stromkreises für das Licht gefolgt.

Gemäß einer Ausführungsform manipuliert das Zugangsportal die Steuerung der zumindest einen gebäudeinternen elektrischen Komponente durch das Steuerungsgerät, insbesondere wird die Steuerung erst zu einer vorgegebenen Uhrzeit ausgeführt oder in Abhängigkeit von anderen Schaltvorgängen oder Gerätezuständen ausgeführt oder nicht ausführt.

Gemäß einem dritten Aspekt betrifft die Erfindung ein Zugangssystem für ein gebäudeinternes Kommunikationsnetz, umfassend: ein gebäudeinternes Zugangsportal für zumindest eine gebäudeinterne elektrische Komponente, welche an das Zugangsportal angeschlossen ist; einen Authentifizierungsserver erreichbar über ein gebäudeexternes Kommunikationsnetz; und ein Steuerungsgerät zur Steuerung der zumindest einen gebäudeinternen elektrischen Komponente, wobei das gebäudeinterne Zugangsportal ausgelegt ist, eine Netzwerkadresse des gebäudeinternen Zugangsportals und eine Zugangsberechtigung für das gebäudeinterne Zugangsportal bei dem Authentifizierungsserver zu hinterlegen; und ansprechend auf eine Anfrage des Steuerungsgeräts einen lokalen Steuerungskanal zu dem Steuerungsgerät aufzubauen, wenn die Anfrage die in dem Authentifizierungsserver hinterlegte Zugangsberechtigung umfasst, wobei der Authentifizierungsserver ausgelegt ist, ansprechend auf eine Anfrage des Steuerungsgeräts nach einer Netzwerkadresse des gebäudeinternen Zugangsportals und einer Zugangsberechtigung für das gebäudeinterne Zugangsportal unter Authentifizierung des Steuerungsgeräts bei dem Authentifizierungsserver die angefragte Netzwerkadresse und die angefragte Zugangsberechtigung bei erfolgreicher Authentifizierung des Steuerungsgeräts und bei Vorliegen einer Zuordnung zwischen dem Steuerungsgerät und dem gebäudeinternen Zugangsportal in dem Authentifizierungsserver an das Steuerungsgerät zu übermitteln; und wobei das Steuerungsgerät ausgelegt ist, bei dem Authentifizierungsserver nach einer Netzwerkadresse des gebäudeinternen Zugangsportals und einer Zugangsberechtigung für das Zugangsportal unter Authentifizierung des Steuerungsgeräts bei dem Authentifizierungsserver anzufragen; und basierend auf der durch den Server übermittelten Netzwerkadresse des gebäudeinternen Zugangsportals unter Verwendung der übermittelten Zugangsberechtigung einen lokalen Steuerungskanal zu dem gebäudeinternen Zugangsportal aufzubauen.

Dies hat den Vorteil, dass ein solches Zugangssystem eine störungstolerante und schnell reagierende Steuerung eines Haussteuerungsgateways bzw. Zugangsportals über ein Steuerungsgerät ermöglicht, indem ein lokaler Steuerungskanal aufgebaut wird. Mit dem lokalen Steuerungskanal wird die Latenzzeit zur Steuerung einer elektrischen Komponente des gebäudeinternen Kommunikationsnetzes durch das Steuerungsgerät sehr kurz zu halten. Der Anwender hat somit das Gefühl, dass ein auf dem Steuerungsgerät initiierter Schaltvorgang über das Zugangsportal unmittelbar umgesetzt wird. Der Vorgang des Einschaltens einer Lampe beispielsweise wird unmittelbar von dem Vorgang des Schaltens des Stromkreises für das Licht gefolgt.

Gemäß einem vierten Aspekt betrifft die Erfindung ein Verfahren zum Authentifizieren eines Steuerungsgeräts zur Steuerung zumindest einer gebäudeinternen elektrischen Komponente, welche an ein gebäudeinternes Zugangsportal angeschlossen ist, bei einem gebäudeexternen Authentifizierungsserver über ein gebäudeexternes Kommunikationsnetz, mit: Übermitteln einer Anfrage des Steuerungsgerätes an den gebäudeexternen Authentifizierungsserver nach einer Zugangsberechtigung für das gebäudeinterne Zugangsportal unter Angabe einer Identifikation des Steuerungsgeräts; und Überprüfen durch den gebäudeexternen Authentifizierungsserver, ob zu der Identifikation des Steuerungsgeräts eine Zuordnung zu einer Zugangsberechtigung für das gebäudeinterne Zugangsportal in einem Speicher des gebäudeexternen Authentifizierungsserver vorhanden ist, wobei die Authentifizierung erfolgreich ist, wenn die Zuordnung von dem Steuerungsgerät zu der Zugangsberechtigung für das gebäudeinterne Zugangsportal in dem Speicher des gebäudeexternen Authentifizierungsservers vorhanden ist.

Dies hat den Vorteil, dass die Authentizität des Nutzers gewährleistet wird, der das Steuerungsgerät bedient. Der Anwender kann sicher sein, dass nur er selber bzw. nur ein bestimmter Nutzerkreis autorisiert ist, Anwendungen zu steuern. Die Zuordnung von Steuerungsgerät zu Zugangsportal in dem Authentifizierungsserver bietet eine einfache und effiziente Möglichkeit der Zugangskontrolle in das gebäudeinterne Netz.

Weitere Ausführungsbeispiele werden Bezug nehmend auf die beiliegenden Zeichnungen erläutert. Es zeigen:
Fig. 1 eine schematische Darstellung der Topologie eines Hausautomationsnetzes 100 mit Kommunikation zwischen Haussteuerungs-Gateway und Steuerungsgerät über den zentralen Dienst;
Fig. 2 eine schematische Darstellung der Topologie eines Zugangssystems 200 für ein gebäudeinternes Kommunikationsnetz mit direkter Kommunikation zwischen Zugangsportal und Steuerungsgerät gemäß einer Ausführungsform;
Fig. 3 eine schematische Darstellung der Topologie eines Zugangssystems 300, bei dem das Zugangsportal über ein Automationsnetz 320 Zugang zu den einzelnen Sensoren/Aktoren gewährt, gemäß einer Ausführungsform;
Fig. 4 eine schematische Darstellung der Topologie eines Zugangssystems 400 für ein gebäudeinternes Kommunikationsnetz gemäß einer weiteren Ausführungsform;
Fig. 5 eine schematische Darstellung eines Verfahrens 500 zum Aufbau eines lokalen Steuerungskanals zwischen einem Steuerungsgerät und einem gebäudeinternen Zugangsportal gemäß einer Ausführungsform;
Fig. 6 eine schematische Darstellung eines Verfahrens 600 zum Aufbau eines lokalen Steuerungskanals zwischen einem Steuerungsgerät und einem gebäudeinternen Zugangsportal gemäß einer weiteren Ausführungsform;
Fig. 7 eine schematische Darstellung eines Zugangsportals 700 für eine gebäudeinterne elektrische Komponente gemäß einer Ausführungsform; und
Fig. 8 eine schematische Darstellung eines Verfahrens 800 zum Authentifizieren eines Steuerungsgeräts bei einem gebäudeexternen Authentifizierungsserver gemäß einer Ausführungsform.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Wenngleich ein bestimmtes Merkmal oder ein bestimmter Aspekt einer Ausführungsform bezüglich nur einer von mehreren Implementierungen offenbart worden sein mag, kann außerdem ein derartiges Merkmal oder ein derartiger Aspekt mit einem oder mehreren anderen Merkmalen oder Aspekten der anderen Implementierungen kombiniert werden, wie für eine gegebene oder bestimmte Anwendung erwünscht und vorteilhaft sein kann. Weiterhin sollen in dem Ausmaß, in dem die Ausdrücke "enthalten", "haben", "mit" oder andere Varianten davon entweder in der ausführlichen Beschreibung oder den Ansprüchen verwendet werden, solche Ausdrücke auf eine Weise ähnlich dem Ausdruck "umfassen" einschließend sein. Die Ausdrücke "gekoppelt" und "verbunden" können zusammen mit Ableitungen davon verwendet worden sein. Es versteht sich, dass derartige Ausdrücke dazu verwendet werden, um anzugeben, dass zwei Elemente unabhängig davon miteinander kooperieren oder interagieren, ob sie in direktem physischem oder elektrischem Kontakt stehen oder nicht in direktem Kontakt miteinander stehen. Außerdem ist der Ausdruck "beispielhaft" lediglich als ein Beispiel aufzufassen anstatt der Bezeichnung für das Beste oder Optimale. Die folgende Beschreibung ist deshalb nicht in einem einschränkenden Sinne zu verstehen.

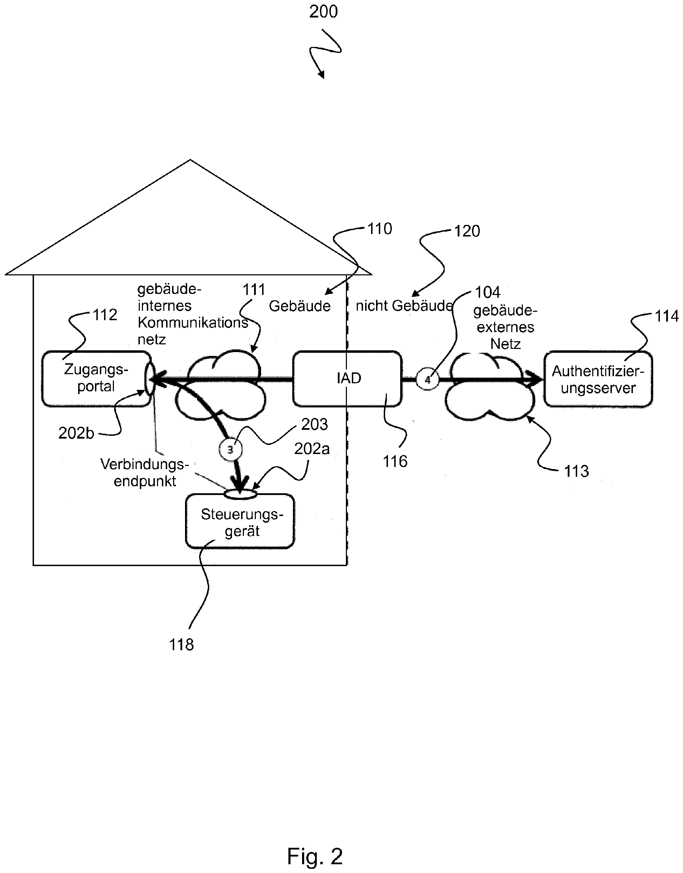

Fig. 2 zeigt eine schematische Darstellung der Topologie eines Zugangssystems 200 für ein gebäudeinternes Automationsnetz mit direkter Kommunikation 203 zwischen Zugangsportal 112 und Steuerungsgerät 118 gemäß einer Ausführungsform.

Für die weitere Beschreibung wird die in Fig. 2 dargestellte Topologie zur Hausautomatisierung zu Grunde gelegt, die sich an die in Fig. 1 dargestellte Topologie anlehnt. So kann das in Fig. 2 beschriebene Zugangsportal 112 ein Haussteuerungs-Gateway sein wie in Fig. 1 beschrieben. Das Steuerungsgerät 118 aus Fig. 2 kann einem der in Fig. 1 beschriebenen Steuerungsgeräte 118a, 118b entsprechen. Das gebäudeinterne Netz 111 aus Fig. 2 kann ein Heimnetz sein, wie in Fig. 1 beschrieben. Das gebäudeexterne Netz 113 aus Fig. 2 kann das Internet sein, wie in Fig. 1 beschrieben. Der in Fig. 2 beschriebene Authentifizierungsserver 114 kann den Zentralen Dienst, wie in Fig. 1 beschrieben, umfassen.

Das in Fig. 2 beschriebene Gebäude 110 kann ein "Zuhause" darstellen, wie in Fig. 1 beschrieben. Das in Fig. 2 beschriebene "nicht Gebäude" 120 bzw. der Bereich außerhalb des Gebäudes kann das "nicht Zuhause" darstellen, wie in Fig. 1 beschrieben. Das in Fig. 2 beschriebene IAD 116 kann dem in Fig. 1 dargestellten IAD entsprechen.

Den Steuerungsgeräten kann insbesondere zur Reduktion der Latenzzeit und wenn sie sich im "Zuhause" bzw. im "Gebäude" 110 befinden, die Möglichkeit gegeben werden, direkt mit dem Zugangsportal 112 zu kommunizieren. D.h. die Kommunikationsverbindungen 1 und 4 in Fig. 1, die eine relativ lange Latzenzzeit erfordern, werden zur Kommunikationsverbindung 3 in Fig. 2 "umgeleitet", die ihrerseits nur eine kurze Latenzzeit erfordert. "Zuhause" bzw. Gebäude 110 oder gebäudeintern zeichnet sich dadurch aus, dass die Kommunikationspartner über ein Heimnetz bzw. ein gebäudeinternes Netz 111, z.B. ein LAN kommunizieren. Dagegen zeichnet sich das "nicht Zuhause" bzw. "nicht Gebäude" oder gebäudeextern dadurch aus, dass die Kommunikationspartner über ein Fernverbindungsnetz 113, z.B. das Internet kommunizieren.

Auf einem Haussteuerungs-Gateway bzw. einem gebäudeinternen Zugangsportal 112 können Anwendungen zur Haussteuerung bzw. Gebäudesteuerung oder-automatisierung betrieben werden. Das Haussteuerungs-Gateway bzw. das Zugangsportal 112 kann dabei einerseits mit den Aktoren und Sensoren kommunizieren, d.h. elektrischen Komponenten des gebäudeinternen Netzes wie z.B. Heizungsstellern oder Lichtschaltern. Diese Kommunikation ist in Fig. 2 nicht dargestellt. Andererseits kann das Haussteuerungs-Gateway bzw. Zugangsportal 112 mit Steuerungsgeräten kommunizieren, wie zum Beispiel Tablet PCs oder Smartphones. Letztere können damit die Hausautomatisierungstechnik steuern.

Auf dem Zentralen Dienst bzw. dem Authentifizierungsserver 114 können Anwendungen zur Haussteuerung bzw. Gebäudeautomatisierung betrieben werden. Der Zentrale Dienst bzw. der Authentifizierungsserver 114 kann dabei einerseits mit dem Haussteuerungs-Gateway bzw. Zugangsportal 112 kommunizieren und damit mittelbar die Aktoren und Sensoren steuern, z.B. die Heizungssteller oder Lichtschalter. Andererseits kann der Zentrale Dienst bzw. der Authentifizierungsserver 114 mit Steuerungsgeräten 118, wie zum Beispiel Tablet PCs oder Smartphones kommunizieren. Letztere können damit den Zentralen Dienst bzw. den Authentifizierungsserver 114 steuern.

Der Zentrale Dienst bzw. der Authentifizierungsserver 114 braucht nur einmal vorgehalten werden während es viele Steuerungsgeräte 118 geben kann; eines in jedem "Zuhause" bzw. Gebäude 110.

Die Steuerungsgeräte 118 können mit dem Haussteuerungs-Gateway bzw. Zugangsportal 112 oder mit dem Zentralen Dienst bzw. dem Authentifizierungsserver 114 kommunizieren. Damit können sie mittelbar die Aktoren und Sensoren der Haussteuerung steuern. Steuerungsgeräte 118 können z.B. Tablet PCs oder Smartphones sein. Die Kommunikation zwischen Steuerungsgerät 118 und Haussteuerungs-Gateway bzw. Zugangsportal 112 kann dabei entweder lokal über das Heimnetz bzw. das gebäudeinterne Netz 111 oder über das Internet bzw. das gebäudeexterne Netz 113 stattfinden. Dies ist in verschiedenen Variationen in Fig. 2 dargestellt.

Das Heimnetz bzw. das gebäudeinterne Netz 111 kann insbesondere das Haussteuerungs Gateway bzw. Zugangsportal 112, Steuerungsgeräte 118 und das IAD 116 im "Zuhause" bzw. im Gebäude 110 verbinden und es diesen Entitäten ermöglichen miteinander zu kommunizieren. Das Heimnetz bzw. gebäudeinterne Netz 111 kann beispielsweise ein IP basiertes LAN Netz sein.

Das Internet bzw. das gebäudeexterne Netz kann insbesondere mittels dem IAD 116 das Heimnetz bzw. das gebäudeinterne Netz 111, Steuerungsgeräte 118 und den Zentralen Dienst bzw. den Authentifizierungsserver 114 im "nicht Zuhause" bzw. außerhalb des Gebäudes 120 verbinden und es diesen Entitäten ermöglichen miteinander zu kommunizieren. Das gebäudeexterne Netz 113 kann das Internet sein.
Die Verbindungsendpunkte 202a, 202b bzw. deren Adressen oder Netzwerkadressen ermöglichen es, die beteiligten Kommunikationspartner eindeutig zu adressieren.

Das Internet Access Device (IAD) 116 ist ein Gerät, das sich physikalisch im "Zuhause" bzw. im Gebäude 110 befinden kann und dort die Kommunikation zwischen dem Heimnetz bzw. dem gebäudeinternen Netz 111 und dem Internet bzw. dem gebäudeexternen Netz ermöglichen kann. Das IAD 116 ist für den Aufbau des lokalen Steuerungskanals 203 nicht notwendigerweise erforderlich. Eine Verbindung zu dem Authentifizierungsserver 114 kann auch ohne das Vorhandensein des IAD 116 hergestellt werden.

Wie in Fig. 2 dargestellt umfasst das Zugangssystem 200 ein gebäudeinternes Zugangsportal 112 für eine gebäudeinterne elektrische Komponente, welche an das Zugangsportal 112 angeschlossen ist; einen Authentifizierungsserver 114 eines gebäudeexternen Kommunikationsnetzes 113; und ein Steuerungsgerät 118 zur Steuerung der gebäudeinternen elektrischen Komponente.

Der Aufbau des lokalen Steuerungskanals 203 kann dabei wie folgt geschehen:
Das gebäudeinterne Zugangsportal 112 hinterlegt seine Netzwerkadresse 202b und eine Zugangsberechtigung zum Zugriff auf das gebäudeinterne Zugangsportal 112 bei dem Authentifizierungsserver 114.

Das Steuerungsgerät 118 fragt bei dem Authentifizierungsserver 114 nach einer Netzwerkadresse 202b des gebäudeinternen Zugangsportals 112 und einer Zugangsberechtigung für das Zugangsportal 112 unter Authentifizierung des Steuerungsgeräts 118 bei dem Authentifizierungsserver 114 an.

Der Authentifizierungsserver 114 übermittelt ansprechend auf die Anfrage des Steuerungsgeräts 118 nach der Netzwerkadresse 202b des gebäudeinternen Zugangsportals 112 und der Zugangsberechtigung für das gebäudeinterne Zugangsportal 112 unter Authentifizierung des Steuerungsgeräts 118 bei dem Authentifizierungsserver 114 die angefragte Netzwerkadresse 202b und die angefragte Zugangsberechtigung an das Steuerungsgerät 118, sofern sich das Steuerungsgerät 118 erfolgreich authentifiziert hat und eine Zuordnung 611 zwischen dem Steuerungsgerät 118 und dem gebäudeinternen Zugangsportal 112 in dem Authentifizierungsserver 114 vorliegt.

Das Steuerungsgerät 118 baut darauf basierend auf der durch den Server 114 übermittelten Netzwerkadresse 202b des gebäudeinternen Zugangsportals 112 unter Verwendung der übermittelten Zugangsberechtigung einen lokalen Steuerungskanal 203 zu dem gebäudeinternen Zugangsportal 112 auf.

In einer nicht detaillierten, weiteren Ausführungsform kann der Aufbau des lokalen Steuerungskanals 203 auch durch das Zugangsportal 112 initiiert werden. Hierfür kann die lokale Adresse des Steuerungsgerätes an das Zugangsportal übermittelt werden.

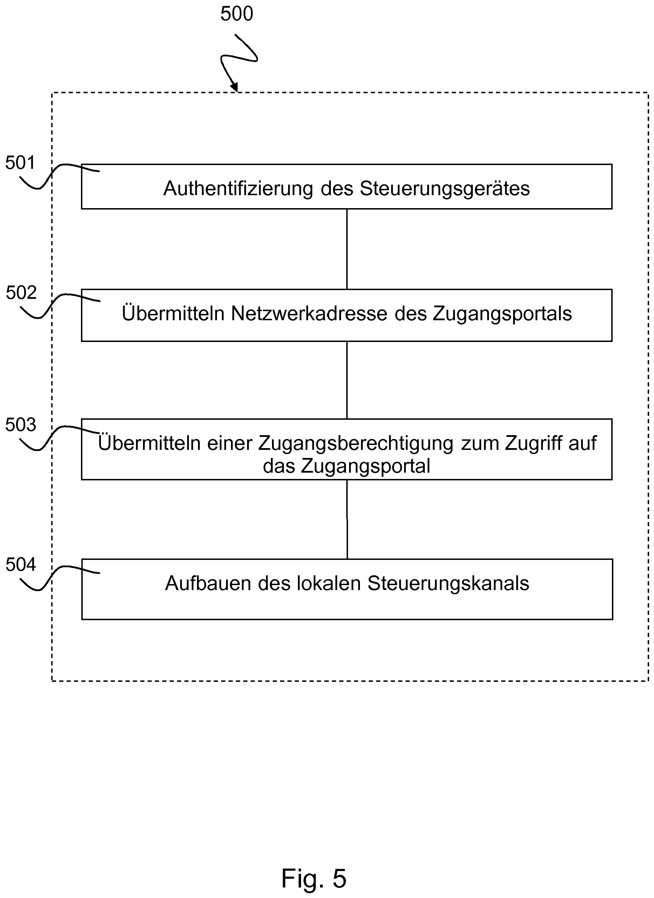

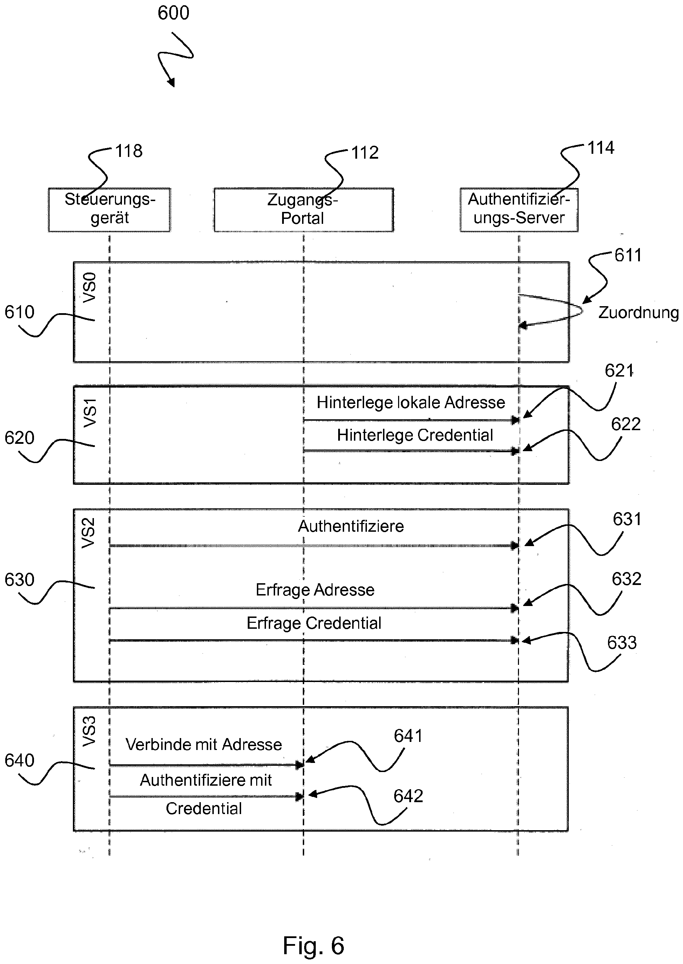

Die Details zum Aufbau des lokalen Steuerungskanals 203 finden sich in der Beschreibung zu den Figuren 5 und 6.

In Fig. 2 ist lediglich ein Zugangsportal 112 bzw. Haussteuerungs-Gateway dargestellt. Es versteht sich, dass das Steuerungsgerät 118 auch lokale Kommunikationskanäle zu weiteren, in Fig. 2 nicht dargestellten Zugangsportalen aufbauen kann.

Fig. 3 zeigt eine schematische Darstellung der Topologie eines Zugangssystems 300, bei dem das Zugangsportal 112 über ein Automationsnetz 320 Zugang zu den einzelnen Sensoren/Aktoren gewährt, gemäß einer Ausführungsform. Das Zugangsportal 112 ist über das Automationsnetz 320 mit den Sensoren/Aktoren 311, 312, 313 des gebäudeinternen Kommunikationsnetzes 111 bzw. Heimnetzes verbunden. Das Automationsnetz 320 kann mehrere Gerätenetze 321, 322, 323 umfassen, um das Zugangsportal 112 über ein jeweiliges der Gerätenetze mit einer einzelnen gebäudeinternen elektrischen Komponente 311, 312, 313 zu verbinden.

Das Zugangsportal kontrolliert den Zugriff auf das Automationsnetz 320 und damit auf die Gerätenetze 321, 322, 323. Das Automationsnetz 320 verbindet die Hausautomatisierungsgeräte wie die einzelnen Aktoren und Sensoren 311, 312, 313 mit dem Zugangsportal 112. In einer Ausführungsform umfasst das Automationsnetz 300 nicht nur ein einziges Gerätenetz, sondern eine Vielzahl von Gerätenetzen 321, 322, 323, wie in Fig. 3 dargestellt, beispielsweise ein Gerätenetz pro Technologie oder pro Hersteller. Alle Gerätenetze 321, 322, 323 werden von dem einen Zugangsportal 112 "bewacht".

In einer speziellen Ausführungsform kann das Heimnetz bzw. das gebäudeinterne Kommunikationsnetz 111 seinerseits als ein Gerätenetz verstanden werden, d.h. es kann mit einem Gerätenetz zusammenfallen.

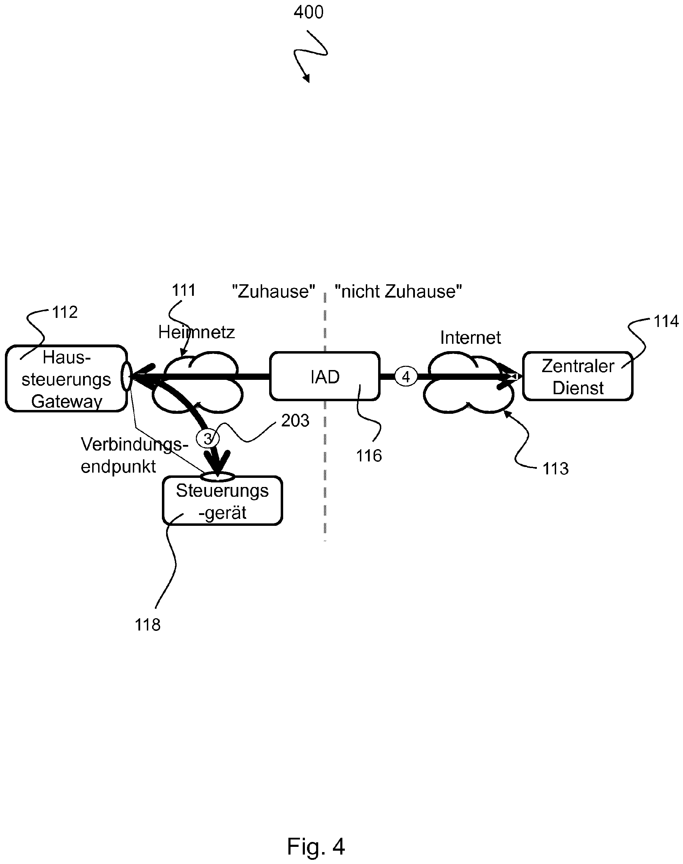

Fig. 4 zeigt eine schematische Darstellung der Topologie eines Zugangssystems 400 für ein gebäudeinternes Kommunikationsnetz gemäß einer weiteren Ausführungsform. Das Zugangssystem 400 entspricht dem in Fig. 2 beschriebenen Zugangssystem 200, wobei das Zugangsportal 112 als ein Haussteuerungs-Gateway realisiert ist und der Authentifizierungsserver 114 als Zentraler Dienst gemäß der Darstellung in Fig. 1 realisiert ist.

Fig. 5 zeigt eine schematische Darstellung eines Verfahrens 500 zum Aufbau eines lokalen Steuerungskanals zwischen einem Steuerungsgerät und einem gebäudeinternen Zugangsportal gemäß einer Ausführungsform.

Das Verfahren 500 zum Aufbau eines lokalen Steuerungskanals 203 entsprechend der Darstellung der Figur 2 zwischen einem Steuerungsgerät 118 zur Steuerung einer gebäudeinternen elektrischen Komponente, welche an ein gebäudeinternes Zugangsportal 112 angeschlossen ist, und dem gebäudeinternen Zugangsportal 112 umfasst die in Figur 5 dargestellten vier Schritte 501, 502, 503, 504. Diese sind Authentifizierung 501 des Steuerungsgerätes 118 gegenüber einem gebäudeexternen Authentifizierungsserver 114 über ein gebäudeexternes Kommunikationsnetzwerk; Übermitteln 502 einer Netzwerkadresse 202b des gebäudeinternen Zugangsportals 112 durch den gebäudeexternen Authentifizierungsserver 114 an das Steuerungsgerät 118 bei erfolgreicher Authentifizierung des Steuerungsgerätes 118 gegenüber dem gebäudeexternen Authentifizierungsserver 114 über das gebäudeexterne Kommunikationsnetzwerk 113; Übermitteln 503 einer Zugangsberechtigung zum Zugriff auf das gebäudeinterne Zugangsportal 112 an das Steuerungsgerät 118 durch den gebäudeexternen Authentifizierungsserver 114 über das gebäudeexterne Kommunikationsnetzwerk 113 bei erfolgreicher Authentifizierung des Steuerungsgerätes 118 gegenüber dem gebäudeexternen Authentifizierungsserver 114 über das gebäudeexterne Kommunikationsnetzwerk 113; und Aufbauen 304 des lokalen Steuerungskanals 203 zwischen dem Steuerungsgerät 118 und dem gebäudeinternen Zugangsportal 112 ansprechend auf den Empfang der Netzwerkadresse 202b des gebäudeinternen Zugangsportals 112 und der Zugangsberechtigung.

Die gebäudeinterne elektrische Komponente kann ein steuerbarer Aktor oder ein steuerbarer Sensor sein. Der steuerbare Aktor kann ein Stellglied für eines der folgenden Geräte sein: Heizung, Jalousien, Alarmanlage, Türschloss, Lichtschalter, Herd, Kühlschrank, Waschmaschine, Kaffeemaschine, Geschirrspülmaschine. Der steuerbare Sensor kann ein Temperaturfühler, ein Drucksensor, ein Lichtsensor oder eine Lichtschranke sein.

Die Netzwerkadresse 202b und die Zugangsberechtigung können gleichzeitig oder nacheinander übermittelt werden.

Das Verfahren 500 kann ferner ein Einrichten einer Zuordnung 611 zwischen dem Steuerungsgerät 118 und dem Zugangsportal 112 in dem gebäudeexternen Authentifizierungsserver 114 umfassen basierend auf einer Freigabe des Steuerungsgeräts 118, die an das gebäudeinterne Zugangsportal 112 angeschlossene gebäudeinterne elektrische Komponente zu steuern.

Das Verfahren 500 kann ferner ein Steuern der an das gebäudeinterne Zugangsportal 112 angeschlossenen gebäudeinternen elektrischen Komponente durch das Steuerungsgerät 118 über den aufgebauten lokalen Steuerungskanal 203 umfassen.

Das Verfahren 500 kann ferner ein Steuern der an das gebäudeinterne Zugangsportal 112 angeschlossenen gebäudeinternen elektrischen Komponente durch das Steuerungsgerät 118 über den aufgebauten lokalen Steuerungskanal 203 unter Umgehung des gebäudeexternen Kommunikationsnetzes 113 umfassen.

Die Netzwerkadresse 202b des gebäudeinternen Zugangsportals 112 kann eine IP Adresse sein, insbesondere der Version IPv4 oder IPv6.

Die Netzwerkadresse 202b des gebäudeinternen Zugangsportals 112 kann im Adressraum oder im Adresssubraum des gebäudeinternen Kommunikationsnetzes 111 liegen.

Das Verfahren 500 kann ferner ein Übermitteln der Netzwerkadresse 202b und der Zugangsberechtigung des gebäudeinternen Zugangsportals 112 durch das gebäudeinterne Zugangsportal 112 an den gebäudeexternen Authentifizierungsserver 114 umfassen und kann ein Speichern einer Zuordnung 611 zwischen einer Identität des gebäudeinternen Zugangsportals 112 und der übermittelten Netzwerkadresse 202b und Zugangsberechtigung des gebäudeinternen Zugangsportals 112 in einem Speicher des gebäudeexternen Authentifizierungsserver 114 umfassen, insbesondere in Form einer Tabelle.

Das gebäudeinterne Zugangsportal 112 kann ein Gateway, insbesondere ein Hausautomatisierungs-Gateway, ein Gateway mit Router-Funktionalität oder ein Router sein.

Das gebäudeinterne Zugangsportal 112 kann Zugang zu einem der folgenden gebäudeinternen Netze 111 gewähren: Gebäudeautomatisierungsnetz, Hausautomationsnetz, Industrieautomatisierungsnetz, Smart Home Netz, Smart Metering Netz, Haushaltsgeräteautomationsnetz, Unterhaltungselektronikautomationsnetz, Internet der Dinge, Internet of things. Das gebäudeexterne Kommunikationsnetz 113 kann das Internet sein.

Eine weitere Ausgestaltung des Verfahrens 500 wird in Figur 6 dargestellt.

Fig. 6 zeigt eine schematische Darstellung eines Verfahrens 600 zum Aufbau eines lokalen Steuerungskanals zwischen einem Steuerungsgerät 118 und einem gebäudeinternen Zugangsportal 112 entsprechend der Darstellung in Fig. 2 gemäß einer weiteren Ausführungsform.

Das Verfahren 600 umfasst die vier Verfahrensschritte VS0 610, VS1 620, VS2 630 und VS3 640, wobei in jedem der Schritte Teilschritte ausgeführt werden, wie im Folgenden beschrieben.

Verfahrensschritt 0 umfasst vorausgegangene Aktionen, wie die Zuordnung 611 von Steuerungsgerät 118 zu gebäudeinternem Zugangsportal 112 bzw. Haussteuerungs-Gateway. Der Authentifizierungsserver 114 bzw. der Zentrale Dienst kann eine Zuordnung 611 von einem Steuerungsgerät 118 zu einem Zugangsportal 112 bzw. Haussteuerungs-Gateway besitzen. Die Zuordnung 611 kann besagen, dass das Zugangsportal 112 bzw. das Haussteuerungs-Gateway von diesem Steuerungsgerät 118 gesteuert werden darf. Der Authentifizierungsserver 114 bzw. der Zentrale Dienst kann diese Zuordnung 611 z.B. in einer Tabelle hinterlegen. Das Erstellen und die Verwaltung dieser Zuordnung 611 kann auf verschieden Weise durchgeführt werden, die hier nicht näher beschrieben werden soll. Die Zuordnung 611 kann sich jederzeit während des Ablaufs des Verfahrens 600 ändern. Das Verfahren 600 kann mit dieser Dynamik umgehen.

Sowohl das Zugangsportal 112 bzw. Haussteuerungs-Gateway als auch das Steuerungsgerät 118 können nach Anmeldung im gebäudeinternen Netz 111 bzw. Heimnetz, die Verfügbarkeit der Verbindung vorausgesetzt, mit dem Authentifizierungsserver 114 bzw. dem Zentralen Dienst kommunizieren. Dieser Schritt ist in Fig. 6 nicht dargestellt.

Verfahrensschritt 1 umfasst das Hinterlegen der Adresse des Zugangsportals 112 bzw. Haussteuerungs-Gateways. Das Zugangsportal 112 bzw. Haussteuerungs-Gateway kann seine lokale Adresse beim Authentifizierungsserver 114 bzw. Zentralen Dienst hinterlegen 621. Bei diesem Aufruf 621 kann das das Zugangsportal 112 bzw. Haussteuerungs-Gateway gleichzeitig oder kurz davor oder danach seine eigene Identität übermitteln. Der Authentifizierungsserver 114 bzw. Zentrale Dienst kann eine Zuordnung von Zugangsportal 112 bzw. Haussteuerungs-Gateway und dessen lokaler Adresse beispielsweise in Form einer Tabelle hinterlegen. Es kann ein Nutzungskontext, z.B. eine Session angelegt werden, in dessen Verlauf diese Sub-Schritte, das Ablegen der Adresse 621, das Hinterlegen des Credentials 622 sowie das Übermitteln der Identität stattfinden kann.

Das Zugangsportal 112 bzw. das Haussteuerungs-Gateway kann ein Credential generieren und das Credential beim Authentifizierungsserver 114 bzw. Zentralen Dienst hinterlegen 622. Der Authentifizierungsserver 114 bzw. Zentrale Dienst kann eine Zuordnung von Zugangsportal 112 bzw. Haussteuerungs-Gateway und dessen Credential beispielsweise in Form einer Tabelle hinterlegen.

Das Credential kann eine sehr lange Zahl sein, die de facto nicht zu erraten ist.

Verfahrensschritt 2 umfasst das Abrufen der Adresse des Zugangsportals 112 bzw. Haussteuerungs-Gateways.

Das Steuerungsgerät 118 kann sich beim Authentifizierungsserver 114 bzw. Zentralen Dienst authentifizieren 631. Es kann ein Nutzungskontext, z.B. eine Session angelegt werden, in dessen Verlauf der nächste Sub-Schritt, das Abfragen 633 des Credentials, stattfinden kann.

Das Steuergerät kann die hinterlegte lokale Adresse des Zugangsportals 112 bzw. Haussteuerungs-Gateways abfragen 632. Die Adresse kann von dem Authentifizierungsserver 114 bzw. Zentralen Dienst an das Steuerungsgerät 118 zurückgeliefert werden.

Das Steuergerät kann daneben das hinterlegte Credential des Zugangsportals 112 bzw. Haussteuerungs-Gateways beim Authentifizierungsserver 114 bzw. Zentralen Dienst abfragen 633. Das Credential kann von dem Authentifizierungsserver 114 bzw. Zentralen Dienst an das Steuerungsgerät 118 zurückgeliefert werden. Der Authentifizierungsserver 114 bzw. Zentrale Dienst kann über die genannte Zuordnung 611 zwischen Steuerungsgerät 118 und Zugangsportal 112 bzw. Haussteuerungs-Gateway, welches dem Steuerungsgerät 118 zugeordnet ist, verfügen. Der Authentifizierungsserver 114 bzw. Zentrale Dienst kann damit auch das Credential identifizieren, das wiederum dem Zugangsportal 112 bzw. Haussteuerungs-Gateway zugeordnet ist.

Verfahrensschritt 4 umfasst die Autorisierung des Steuerungsgeräts 118. Unter Verwendung der lokalen Adresse kann eine Verbindung 641 zwischen Steuerungsgerät 118 und Zugangsportal 112 bzw. Haussteuerungs-Gateway etabliert werden. Das Steuerungsgerät 118 kann sein Nutzungsrecht auf dem Zugangsportal 112 bzw. Haussteuerungs-Gateway mit dem Credential authentifizieren 642.

In folgenden werden weitere Ausführungsbeispiele des Verfahrens 600 beschrieben.

In einer Ausführungsform ist es für das Verfahren 600 unerheblich, ob das vom Steuerungsgerät 118 gesteuerte Objekt auf einer dedizierten Hardware eines Zugangsportal 112 bzw. Haussteuerungs-Gateways betrieben wird, oder auf einen anderen Gerät wie z.B. einem Kühlschrank oder einem Fernseher, oder ob das Zugangsportal 112 bzw. Haussteuerungs-Gateway eine irgendwie geartete andere virtuelle Instanz ist.

In einer Ausführungsform ist es für das Verfahren 600 allerdings erheblich, dass sich das Zugangsportal 112 bzw. Haussteuerungs-Gateway im Heimnetz des Kunden befindet.

In einer Ausführungsform ist es für das Verfahren 600 unerheblich, wo die fachliche Logik zur Haussteuerung bzw. Gebäudesteuerung von einer Anwendung erbracht wird. Dies kann nur auf dem Zugangsportal 112 bzw. Haussteuerungs-Gateway, nur auf dem Authentifizierungsserver 114 bzw. Zentralen Dienst oder verteilt zwischen Zugangsportal 112 bzw. Haussteuerungs-Gateway und Authentifizierungsserver 114 bzw. Zentralem Dienst geschehen.

In einer Ausführungsform ist es für das Verfahren 600 unerheblich, ob das gebäudeinterne Netz 111 bzw. Heimnetz ein auf dem Internet Protokoll (IP) basierendes Netz ist, oder ob es sich dabei um eine andere, geeignete Netztechnologie handelt. Das oben, auf einem auf IP basierten LAN beschriebene Beispiel stellt lediglich eine spezielle Ausführungsform des Verfahrens 600 dar.

In einer Ausführungsform ist es für das Verfahren 600 allerdings erheblich, dass das gebäudeinterne Netz 111 bzw. Heimnetz Verbindungsendpunkte 202a, 202b über eindeutige Adressen, beispielsweise Netzwerkadressen adressiert.

In einer Ausführungsform ist es für das Verfahren 600 unerheblich, ob der in diesem Dokument verwendete Begriff Internet das allgemein bekannte, IP basierte Internet ist, oder ob es sich dabei um eine andere, geeignete Netztechnologie handelt. Insofern stellt das Internet lediglich eine spezielle Ausführungsform für das Verfahrens 600 dar.

In einer Ausführungsform ist es für das Verfahren 600 allerdings erheblich, dass das Internet Verbindungsendpunkte über eindeutige Adressen, beispielsweise Netzwerkadressen adressiert.

In einer Ausführungsform ist es für das Verfahren 600 unerheblich, ob das gebäudeinterne Netz 111 bzw. Heimnetz sich über ein IAD 116 mit dem gebäudeexternen Netz 113 beispielsweise dem Internet verbindet. Die Nutzung eines IADs 116, wie oben in Fig. 2 beschrieben, stellt lediglich eine spezielle Ausführungsform des Verfahrens 600 dar.

In einer Ausführungsform ist es für das Verfahren 600 unerheblich, ob ein Steuerungsgerät 118, das direkt mit dem Zugangsportal 112 bzw. Haussteuerungs-Gateway kommuniziert, sich im gebäudeinternen Netz 111 bzw. Heimnetz befindet oder ob es aus dem gebäudeexternen Netz 113, beispielsweise dem Internet direkt (und ohne über den Authentifizierungsserver 114 bzw. dem Zentralen Dienst zu gehen) mit dem Steuerungsgerät 118 kommuniziert. Letzteres ist z.B. durch den Einsatz von IP Version 6 leicht möglich. Daneben kann auch der Einsatz von IP Version 4 vorgesehen sein.

In einer Ausführungsform ist es für das Verfahren 600 unerheblich, ob es das Steuerungsgerät 118 ist, das die Verbindung zum Zugangsportal 112 bzw. Haussteuerungs-Gateway aufbaut, oder umgekehrt es das Zugangsportal 112 bzw. Haussteuerungs-Gateway ist, das die Verbindung zum Steuerungsgerät 118 aufbaut. Das oben angegebene Beispiel, in dem das Steuerungsgerät 118 die Verbindung aufbaut, stellt lediglich eine spezielle Ausführungsform des Verfahrens 600 dar.

In einer Ausführungsform ist es für das Verfahren 600 unerheblich, ob die Verbindungen zwischen den beteiligten Systemen verschlüsselt sind oder nicht. Das oben gegebene Beispiel geht implizit, d.h. ohne es explizit zu benennen, von unverschlüsselten Verbindungen aus. Dies stellt lediglich eine spezielle Ausführungsform des Verfahrens 600 dar. Eine weitere Ausführungsform etabliert z.B. mit SSL gesicherte Verbindungen. Andere Ausführungsformen sind möglich.

In einer Ausführungsform ist es für das Verfahren 600 unerheblich, ob es das Steuerungsgerät 118 ist, das sich gegenüber dem Authentifizierungsserver 114 bzw. Zentralen Dienst mit geeigneten Credentials authentifiziert, oder ob dies ein Nutzer, z.B. mit Username und Passwort tut. Das oben gegebene Beispiel, in dem sich das Steuerungsgerät 118 authentifiziert, stellt lediglich eine spezielle Ausführungsform des Verfahrens 600 dar.

In einer Ausführungsform ist es für das Verfahren 600 unerheblich, ob der Authentifizierungsserver 114 bzw. der Zentrale Dienst eine Zuordnung 611 von genau einem Steuerungsgerät 118 zu genau einem Zugangsportal 112 bzw. Hausautomatisierungs-Gateway vornimmt, oder ob diese Zuordnung 611 auch eine n-zu-m Beziehung sein kann. Das oben gegebene Beispiel, in dem eine 1-zu-1 Zuordnung 611 beschrieben ist, stellt lediglich eine spezielle Ausführungsform des Verfahrens 600 dar.

In einer Ausführungsform ist es für das Verfahren 600 unerheblich, ob ein und dasselbe Credential für alle Steuerungsgeräte 118 gilt, oder ob ein Credential genau ein einziges Steuerungsgerät 118 authentifiziert. Das oben angegebene Beispiel beschreibt den Fall eines einzigen, universellen Credentials. Dies stellt lediglich eine spezielle Ausführungsform des Verfahrens 600 dar.

In einer Ausführungsform ist es für das Verfahren 600 unerheblich, ob ein Credential z.B. von einem Nutzer während seiner "Lebenszeit" invalidiert werden kann, oder ob das nicht möglich ist. Das oben angegebene Beispiel geht implizit, d.h. ohne es explizit zu benennen, von einem nicht invalidierbaren Credential aus. Dies stellt lediglich eine spezielle Ausführungsform des Verfahrens 600 dar.

In einer Ausführungsform ist es für das Verfahren 600 unerheblich, ob ein Credential vom Zugangsportal 112 bzw. Haussteuerungs-Gateway, dem Authentifizierungsserver 114 bzw. dem Zentralen Dienst oder ggf. von einem anderen Systemelement generiert wird. Das oben angegebene Beispiel, bei dem das Credential von dem Zugangsportal 112 bzw. dem Haussteuerungs-Gateway ausgestellt wird, stellt lediglich eine spezielle Ausführungsform des Verfahrens 600 dar.

In einer Ausführungsform ist es für das Verfahren 600 unerheblich, ob ein Credential mit einer Gültigkeitsdauer versehen ist, oder nicht. Das oben angegebene Beispiel, bei dem das Credential ohne Gültigkeitsdauer ausgestellt wird, stellt lediglich eine spezielle Ausführungsform des Verfahrens 600 dar.

In einer Ausführungsform ist es für das Verfahren 600 unerheblich, ob ein Credential die Syntax "eine lange Zahl" hat, oder nicht. Das oben angegebene Beispiel, bei dem das Credential als "eine lange Zahl" ausgestellt wird, stellt lediglich eine spezielle Ausführungsform des Verfahrens 600 dar. Es gibt daneben eine Vielzahl von anderen Möglichkeiten, beispielsweise unter Nutzung der Technologie der Token.

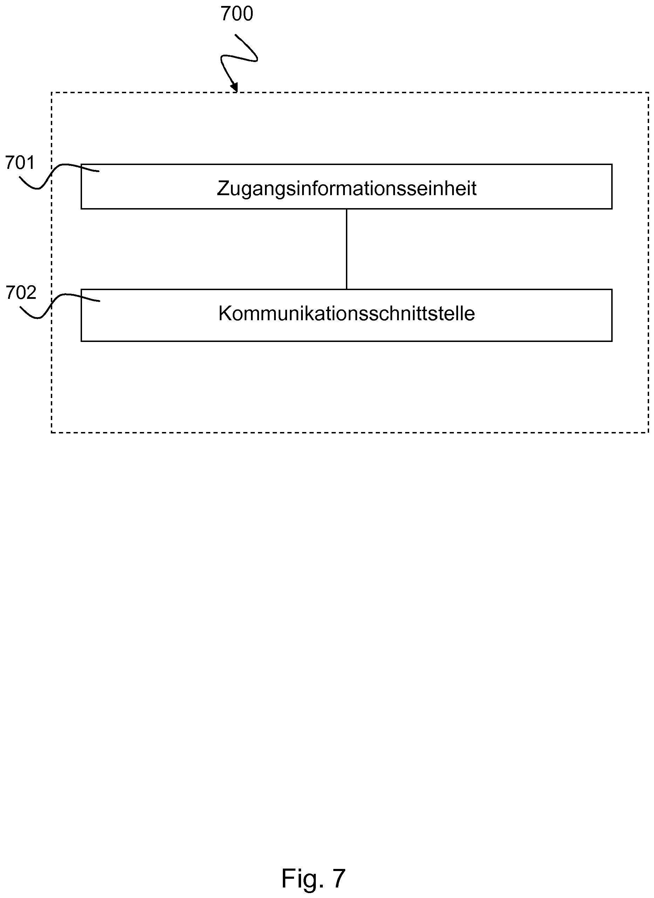

Fig. 7 zeigt eine schematische Darstellung eines Zugangsportals 700 für eine gebäudeinterne elektrische Komponente, welche an das Zugangsportal angeschlossen ist, gemäß einer Ausführungsform. Das Zugangsportal 700 kann dem in Fig. 2 beschriebenen Zugangsportal 112 bzw. dem Haussteuerungs-Gateway entsprechen. Das Zugangsportal 700 kann dem in Fig. 5 und 6 beschriebenen Zugangsportal 112 bzw. dem Haussteuerungs-Gateway entsprechen.

Das Zugangsportal 700 umfasst eine Zugangsinformationsseinheit 701 und eine Kommunikationsschnittstelle 702. Die Zugangsinformationsseinheit 701 ist ausgelegt, eine Netzwerkadresse des gebäudeinternen Zugangsportals 700 und eine Zugangsberechtigung für das gebäudeinterne Zugangsportal 700 bei einem Authentifizierungsserver 114 eines gebäudeexternen Kommunikationsnetzes 113 zu hinterlegen.

Die Kommunikationsschnittstelle 702 ist ausgelegt, ansprechend auf eine Anfrage eines Steuerungsgeräts 118, beispielsweise eines Steuerungsgeräts wie in den Figuren 2 bis 4 beschrieben, zur Steuerung der gebäudeinternen elektrischen Komponente einen lokalen Steuerungskanal 203 zu dem Steuerungsgerät 118 aufzubauen, falls die Anfrage die in dem Authentifizierungsserver 114 hinterlegte Zugangsberechtigung umfasst. Der lokale Steuerungskanal 203 kann so aufgebaut werden, wie in den Figuren 2 bis 6 beschrieben.

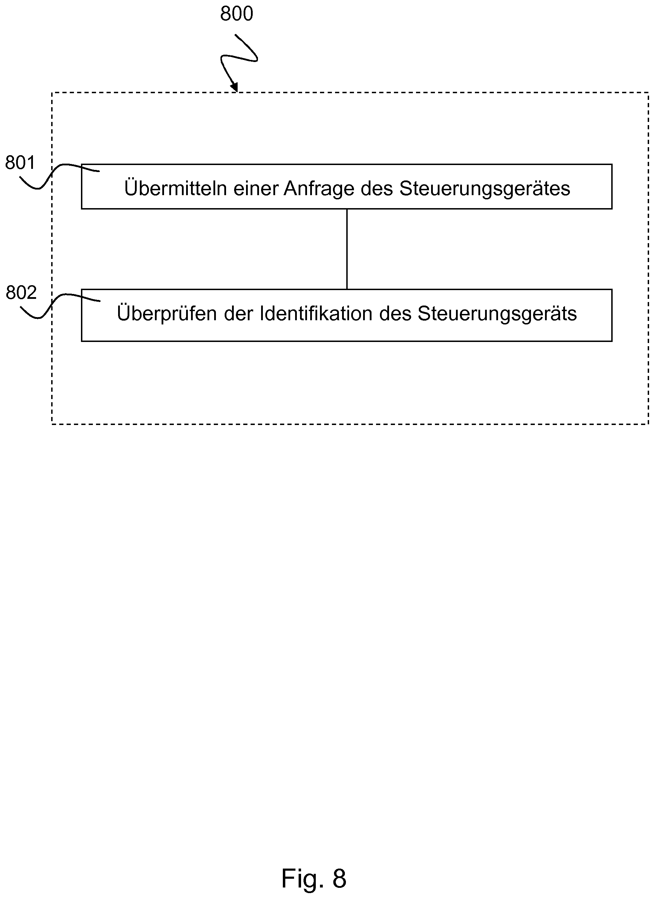

Fig. 8 zeigt eine schematische Darstellung eines Verfahrens 800 zum Authentifizieren eines Steuerungsgeräts bei einem gebäudeexternen Authentifizierungsserver gemäß einer Ausführungsform. Das Steuerungsgerät 118 dient der Steuerung einer gebäudeinternen elektrischen Komponente, welche an ein gebäudeinternes Zugangsportal 112 angeschlossen ist, wie in den Figuren 2 bis 7 beschrieben. Die Authentifizierung erfolgt bei einem gebäudeexternen Authentifizierungsserver 114 über ein gebäudeexternes Kommunikationsnetz 113, wie in den Figuren 2 bis 7 beschrieben.

Das Verfahren 800 umfasst die zwei dargestellten Schritte des Übermittelns 801 und des Überprüfens 802. Das Übermitteln umfasst ein Übermitteln 801 einer Anfrage des Steuerungsgerätes 118 an den gebäudeexternen Authentifizierungsserver 114 nach einer Zugangsberechtigung für das gebäudeinterne Zugangsportal 112 unter Angabe einer Identifikation des Steuerungsgeräts 118.

Das Überprüfen umfasst ein Überprüfen 802 durch den gebäudeexternen Authentifizierungsserver 114, ob zu der Identifikation des Steuerungsgeräts 118 eine Zuordnung 611 zu einer Zugangsberechtigung für das gebäudeinterne Zugangsportal 112 in einem Speicher des gebäudeexternen Authentifizierungsserver 114 vorhanden ist. Die Authentifizierung ist erfolgreich, wenn die Zuordnung 611 von dem Steuerungsgerät 118 zu der Zugangsberechtigung für das gebäudeinterne Zugangsportal 112 in dem Speicher des gebäudeexternen Authentifizierungsservers 114 vorhanden ist.

Ein Aspekt der Erfindung umfasst auch ein Computerprogrammprodukt, das direkt in den internen Speicher eines digitalen Computers geladen werden kann und Softwarecodeabschnitte umfasst, mit denen das zu Fig. 3, Fig. 6 oder Fig. 8 beschriebene Verfahren 300, 600, 800 ausgeführt werden kann, wenn das Produkt auf einem Computer läuft. Das Computerprogrammprodukt kann auf einem computergeeigneten Medium gespeichert sein und folgendes umfassen: computerlesbare Programmittel, die einen Computer veranlassen, das Steuerungsgerätes gegenüber einem gebäudeexternen Authentifizierungsserver über ein gebäudeexternes Kommunikationsnetzwerk zu authentifizieren 501; eine Netzwerkadresse des gebäudeinternen Zugangsportals durch den gebäudeexternen Authentifizierungsserver an das Steuerungsgerät bei erfolgreicher Authentifizierung des Steuerungsgerätes gegenüber dem gebäudeexternen Authentifizierungsserver über das gebäudeexterne Kommunikationsnetzwerk zu übermitteln 502; eine Zugangsberechtigung zum Zugriff auf das gebäudeinterne Zugangsportal an das Steuerungsgerät durch den gebäudeexternen Authentifizierungsserver über das gebäudeexterne Kommunikationsnetzwerk bei erfolgreicher Authentifizierung des Steuerungsgerätes gegenüber dem gebäudeexternen Authentifizierungsserver über das gebäudeexterne Kommunikationsnetzwerk zu übermitteln 503; und den lokalen Steuerungskanals zwischen dem Steuerungsgerät und dem gebäudeinternen Zugangsportal ansprechend auf den Empfang der Netzwerkadresse des gebäudeinternen Zugangsportals und der Zugangsberechtigung aufzubauen 504.

Das Computerprogrammprodukt kann ferner folgendes umfassen: computerlesbare Programmittel, die einen Computer veranlassen, eine Anfrage des Steuerungsgerätes an den gebäudeexternen Authentifizierungsserver nach einer Zugangsberechtigung für das gebäudeinterne Zugangsportal unter Angabe einer Identifikation des Steuerungsgeräts zu übermitteln 801; und durch den gebäudeexternen Authentifizierungsserver zu überprüfen 802, ob zu der Identifikation des Steuerungsgeräts eine Zuordnung zu einer Zugangsberechtigung für das gebäudeinterne Zugangsportal in einem Speicher des gebäudeexternen Authentifizierungsserver vorhanden ist, wobei die Authentifizierung erfolgreich ist, wenn die Zuordnung von dem Steuerungsgerät zu der Zugangsberechtigung für das gebäudeinterne Zugangsportal in dem Speicher des gebäudeexternen Authentifizierungsservers vorhanden ist.

Der Computer kann ein PC sein, beispielsweise ein PC eines Computernetzwerks. Der Computer kann als ein Chip, ein ASIC, ein Mikroprozessor oder ein Signalprozessor realisiert sein und in einem Computernetzwerk, beispielsweise in einem gebäudeinternen Kommunikationsnetzwerk oder in einem gebäudeexternen Kommunikationsnetzwerk wie in Figur 1 oder 2 beschrieben, angeordnet sein.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können, ohne vom Konzept der vorliegenden Erfindung abzuweichen.

### Bezugszeichenliste

- 100:: Hausautomationsnetz
- 101:: Kommunikationskanal zwischen Steuerungsgerät und IAD
- 102:: Kommunikationskanal zwischen Steuerungsgerät und zentralem Dienst
- 104:: Kommunikationskanal zwischen zentralem Dienst und IAD
- 110:: zuhause oder gebäudeinterner Bereich
- 112:: Zugangsportal oder Haussteuerungsgateway
- 114:: Authentifizierungsserver oder Zentraler Dienst
- 115:: Grenze zwischen gebäudeinternem und gebäudeexternem Bereich
- 116:: IAD, Internet Access Device, Internetzugangseinrichtung
- 118:: Steuerungsgerät
- 120:: nicht zuhause oder gebäudeexterner Bereich

- 200:: Zugangssystem für ein gebäudeinternes Kommunikationsnetz
- 202a:: Verbindungsendpunkt bzw. Netzwerkadresse des Steuerungsgeräts
- 202b:: Verbindungsendpunkt bzw. Netzwerkadresse des Zugangsportals
- 203:: lokaler Kommunikationskanal zwischen Steuerungsgerät und Zugangsportal

- 300:: Automationsnetz
- 311:: 1.Sensor und/oder Aktor
- 312:: 2. Sensor und/oder Aktor
- 313:: 3. Sensor und/oder Aktor
- 321:: 1. Gerätenetz
- 322:: 2. Gerätenetz
- 323:: 3. Gerätenetz

- 400:: Zugangssystem für ein gebäudeinternes Kommunikationsnetz

- 500:: Verfahren zum Aufbau eines lokalen Steuerungskanals zwischen Steuerungsgerät und Zugangsportal
- 501:: 1. Verfahrensschritt: Authentifizierung des Steuerungsgeräts
- 502:: 2. Verfahrensschritt: Übermitteln Netzwerkadresse des Zugangsportals
- 503:: 3. Verfahrensschritt: Übermitteln Zugangsberechtigung für das Zugangsportal
- 504:: 3. Verfahrensschritt: Aufbauen des lokalen Steuerungskanals

- 600:: Verfahren zur Steuerung der Kommunikation zwischen gebäudeexternem Kommunikationsserver 108 und einer gebäudeinterner Kommunikationsentität
- 610:: . Verfahrensschritt
- 611:: Herstellen der Zuordnung
- 620:: 2. Verfahrensschritt
- 621:: Hinterlege lokale Adresse
- 622:: Hinterlege Credential
- 630:: 3. Verfahrensschritt
- 631:: Authentifiziere
- 632:: Erfrage Adresse
- 633:: Erfrage Credential
- 640:: 4. Verfahrensschritt
- 641:: Verbinde mit Adresse
- 642:: Authentifiziere mit Credential

- 700:: Zugangsportal
- 701:: Zugangsinformationseinheit
- 702:: Kommunikationsschnittstelle

- 800:: Verfahren zum Authentifizieren eines Steuerungsgeräts bei einem Authentifizierungsserver
- 801:: Übermitteln Anfrage
- 802:: Überprüfen Identifikation

## Patentansprüche

1. Verfahren (500) zum Aufbau eines Steuerungskanals zwischen einem Steuerungsgerät (118) zur Steuerung zumindest einer gebäudeinternen elektrischen Komponente, welche an ein gebäudeinternes Zugangsportal (112) angeschlossen ist, und dem gebäudeinternen Zugangsportal (112), wobei die Kommunikation zwischen dem Steuerungsgerät (118) und dem gebäudeinternen Zugangsportal (112) zur Steuerung der mindestens einen gebäudeinternen elektrischen Komponente fallweise entweder unter Einbeziehung eines gebäudeexternen Netzes (113) erfolgt oder, zur Verkürzung der Latenzzeit, nur über ein gebäudeinternes Netz (111) durch den Aufbau eines lokalen Steuerungskanals (203), mit:
Authentifizierung (501) des Steuerungsgerätes (118) gegenüber einem gebäudeexternen Authentifizierungsserver (114) über ein gebäudeexternes Kommunikationsnetzwerk;
Übermitteln (502) einer Netzwerkadresse des gebäudeinternen Zugangsportals (112) durch den gebäudeexternen Authentifizierungsserver (114) an das Steuerungsgerät (118) bei erfolgreicher Authentifizierung des Steuerungsgerätes (118) gegenüber dem gebäudeexternen Authentifizierungsserver (114) über das gebäudeexterne Kommunikationsnetzwerk (113);
Übermitteln (503) einer Zugangsberechtigung zum Zugriff auf das gebäudeinterne Zugangsportal (112) an das Steuerungsgerät (118) durch den gebäudeexternen Authentifizierungsserver (114) über das gebäudeexterne Kommunikationsnetzwerk (113) bei erfolgreicher Authentifizierung des Steuerungsgerätes (118) gegenüber dem gebäudeexternen Authentifizierungsserver (114) über das gebäudeexterne Kommunikationsnetzwerk (113); und
Aufbauen (504) eines Steuerungskanals (203) zwischen dem Steuerungsgerät (118) und dem gebäudeinternen Zugangsportal (112) ansprechend auf den Empfang der Netzwerkadresse (202b) des gebäudeinternen Zugangsportals (112) und der Zugangsberechtigung.

2. Verfahren (500) nach Anspruch 1,
wobei die zumindest eine gebäudeinterne elektrische Komponente ein steuerbarer Aktor oder ein steuerbarer Sensor ist.

3. Verfahren (500) nach Anspruch 2,
wobei der steuerbare Aktor ein Stellglied für eines inbesondere der folgenden Geräte ist: Heizung, Jalousien, Alarmanlage, Türschloss, Lichtschalter, Herd, Kühlschrank, Waschmaschine, Kaffemaschine, Geschirrspülmaschine, oder
wobei der steuerbare Sensor ein Temperaturfühler, ein Drucksensor, ein Lichtsensor oder eine Lichtschranke ist.

4. Verfahren (500) nach einem der vorstehenden Ansprüche,
wobei die Netzwerkadresse (202b) und die Zugangsberechtigung gleichzeitig oder nacheinander übermittelt werden.

5. Verfahren (500) nach einem der vorstehenden Ansprüche, mit:
Einrichten einer Zuordnung (611) zwischen dem Steuerungsgerät (118) und dem Zugangsportal (112) in dem gebäudeexternen Authentifizierungsserver (114) basierend auf einer Freigabe des Steuerungsgeräts (118), die an das gebäudeinterne Zugangsportal (112) angeschlossene zumindest eine gebäudeinterne elektrische Komponente zu steuern.

6. Verfahren (500) nach einem der vorstehenden Ansprüche, mit:
Steuern der an das gebäudeinterne Zugangsportal (112) angeschlossenen zumindest einen gebäudeinternen elektrischen Komponente durch das Steuerungsgerät (118) über den aufgebauten lokalen Steuerungskanal (203).

7. Verfahren (500) nach einem der vorstehenden Ansprüche, mit:
Steuern der an das gebäudeinterne Zugangsportal (112) angeschlossenen zumindest einen gebäudeinternen elektrischen Komponente durch das Steuerungsgerät (118) über den aufgebauten lokalen Steuerungskanal (203) unter Umgehung des gebäudeexternen Kommunikationsnetzes (113).

8. Verfahren (500) nach einem der vorstehenden Ansprüche,
wobei die Netzwerkadresse (202b) des gebäudeinternen Zugangsportals (112) eine IP Adresse ist, insbesondere der Version IPv4 oder IPv6.

9. Verfahren (500) nach einem der vorstehenden Ansprüche,
wobei die Netzwerkadresse (202b) des gebäudeinternen Zugangsportals (112) im Adressraum oder im Adresssubraum des gebäudeinternen Kommunikationsnetzes (111) liegt.

10. Verfahren (500) nach einem der vorstehenden Ansprüche, mit:
Übermitteln der Netzwerkadresse (292b) und der Zugangsberechtigung des gebäudeinternen Zugangsportals (112) durch das gebäudeinterne Zugangsportal (112) an den gebäudeexternen Authentifizierungsserver (114); und
Speichern einer Zuordnung (611) zwischen einer Identität des gebäudeinternen Zugangsportals (112) und der übermittelten Netzwerkadresse (202b) und Zugangsberechtigung des gebäudeinternen Zugangsportals (112) in einem Speicher des gebäudeexternen Authentifizierungsserver (114), insbesondere in Form einer Tabelle.

11. Verfahren (500) nach einem der vorstehenden Ansprüche,
wobei das gebäudeinterne Zugangsportal (112) ein Gateway, insbesondere ein Hausautomatisierungs-Gateway, ein Gateway mit Router-Funktionalität oder ein Router ist.

12. Verfahren (500) nach einem der vorstehenden Ansprüche,
wobei das gebäudeinterne Zugangsportal (112) Zugang zu einem insbesondere der folgenden gebäudeinternen Netze (111) gewährt:
Gebäudeautomatisierungsnetz,
Hausautomationsnetz,
Industrieautomatisierungsnetz,
Smart Home Netz,
Smart Metering Netz,
Haushaltsgeräteautomationsnetz,
Unterhaltungselektronikautomationsnetz,
Internet der Dinge, Internet of things; und
wobei das gebäudeexterne Kommunikationsnetz (113) das Internet ist.

13. Verfahren (500) nach einem der vorstehenden Ansprüche,
wobei die Authentifizierung des Steuerungsgeräts gegenüber dem gebäudeexternen Authentifizierungsserver zuerst über ein gebäudeinternes Kommunikationsnetz und danach über das gebäudeexterne Kommunikationsnetz erfolgt.

14. Verfahren (500) nach einem der Ansprüche 1 bis 13, wobei das Authentifizieren des Steuerungsgeräts (118) bei dem gebäudeexternen Authentifizierungsserver (114) über das gebäudeexternes Kommunikationsnetz (113) folgendes umfasst:
Übermitteln (801) einer Anfrage des Steuerungsgerätes (118) an den gebäudeexternen Authentifizierungsserver (114) nach einer Zugangsberechtigung für das gebäudeinterne Zugangsportal (112) unter Angabe einer Identifikation des Steuerungsgeräts (118); und
Überprüfen (802) durch den gebäudeexternen Authentifizierungsserver (114), ob zu der Identifikation des Steuerungsgeräts (118) eine Zuordnung (611) zu einer Zugangsberechtigung für das gebäudeinterne Zugangsportal (112) in einem Speicher des gebäudeexternen Authentifizierungsserver (114) vorhanden ist,
wobei die Authentifizierung erfolgreich ist, wenn die Zuordnung (611) von dem Steuerungsgerät (118) zu der Zugangsberechtigung für das gebäudeinterne Zugangsportal (112) in dem Speicher des gebäudeexternen Authentifizierungsservers (114) vorhanden ist.

15. Zugangsportal (112) für zumindest eine gebäudeinterne elektrische Komponente, welche an das Zugangsportal (112) angeschlossen ist, umfassend:
eine Zugangsinformationsseinheit (701), die ausgelegt ist, eine Netzwerkadresse des gebäudeinternen Zugangsportals (112) und eine Zugangsberechtigung für das gebäudeinterne Zugangsportal (112) bei einem Authentifizierungsserver (114) eines gebäudeexternen Kommunikationsnetzes (113) zu hinterlegen; und
eine Kommunikationsschnittstelle (702), die ausgelegt ist, ansprechend auf eine Anfrage eines Steuerungsgeräts (118) zur Steuerung der zumindest einen gebäudeinternen elektrischen Komponente einen Steuerungskanal (203) zu dem Steuerungsgerät (118) aufzubauen, falls die Anfrage die in dem Authentifizierungsserver (114) hinterlegte Zugangsberechtigung umfasst, wobei das Zugangsportal so ausgelegt ist, dass die Kommunikation zwischen dem Steuerungsgerät (118) und dem gebäudeinternen Zugangsportal (112) zur Steuerung der mindestens einen gebäudeinternen elektrischen Komponente fallweise entweder unter Einbeziehung eines gebäudeexternen Netzes (113) erfolgt oder, zur Verkürzung der Latenzzeit, nur über ein gebäudeinternes Netz (111) durch den Aufbau eines lokalen Steuerungskanals (203).

16. Zugangsportal (112) nach Anspruch 15,
wobei das Zugangsportal die Steuerung der zumindest einen gebäudeinternen elektrischen Komponente durch das Steuerungsgerät manipuliert, insbesondere erst zu einer vorgegebenen Uhrzeit ausführt oder in Abhängigkeit von anderen Schaltvorgängen oder Gerätezuständen ausführt oder nicht ausführt.

17. Zugangssystem (200) für ein gebäudeinternes Kommunikationsnetz (111), umfassend:
ein gebäudeinternes Zugangsportal (112) für zumindest eine gebäudeinterne elektrische Komponente, welche an das Zugangsportal (112) angeschlossen ist;
einen Authentifizierungsserver (114) erreichbar über ein gebäudeexternes Kommunikationsnetz (113); und
ein Steuerungsgerät (118) zur Steuerung der zumindest einen gebäudeinternen elektrischen Komponente, welches für eine Kommunikation mit dem gebäudeinternen Zugangsportal (112) zur Steuerung der mindestens einen an dieses angeschlossenen elektrischen Komponente fallweise entweder unter Einbeziehung des gebäudeexternen Netzes (113) verbindbar ist oder über einen nur über das gebäudeinterne Netz (111) aufgebauten lokalen Steuerungskanals (203),
wobei das gebäudeinterne Zugangsportal (112) ausgelegt ist, eine Netzwerkadresse des gebäudeinternen Zugangsportals (112) und eine Zugangsberechtigung für das gebäudeinterne Zugangsportal (112) bei dem Authentifizierungsserver (114) zu hinterlegen; und ansprechend auf eine Anfrage des Steuerungsgeräts (118) einen Steuerungskanal (203) zu dem Steuerungsgerät (118) aufzubauen, wenn die Anfrage die in dem Authentifizierungsserver (114) hinterlegte Zugangsberechtigung umfasst,
wobei der Authentifizierungsserver (114) ausgelegt ist, ansprechend auf eine Anfrage des Steuerungsgeräts (118) nach einer Netzwerkadresse (202b) des gebäudeinternen Zugangsportals (112) und einer Zugangsberechtigung für das gebäudeinterne Zugangsportal (112) unter Authentifizierung des Steuerungsgeräts (118) bei dem Authentifizierungsserver (114) die angefragte Netzwerkadresse (202b) und die angefragte Zugangsberechtigung bei erfolgreicher Authentifizierung des Steuerungsgeräts (118) und bei Vorliegen einer Zuordnung (611) zwischen dem Steuerungsgerät (118) und dem gebäudeinternen Zugangsportal (112) in dem Authentifizierungsserver (114) an das Steuerungsgerät (118) zu übermitteln; und
wobei das Steuerungsgerät (118) ausgelegt ist, bei dem Authentifizierungsserver (114) nach einer Netzwerkadresse (202b) des gebäudeinternen Zugangsportals (112) und einer Zugangsberechtigung für das Zugangsportal (112) unter Authentifizierung des Steuerungsgeräts (118) bei dem Authentifizierungsserver (114) anzufragen; und basierend auf der durch den Server (114) übermittelten Netzwerkadresse (202b) des gebäudeinternen Zugangsportals (112) unter Verwendung der übermittelten Zugangsberechtigung einen Steuerungskanal (203) zu dem gebäudeinternen Zugangsportal (112) aufzubauen.

## Claims

1. Method (500) for establishing a control channel between a control unit (118) for controlling at least one building-internal electrical component connected to a building-internal access portal (112) and the building-internal access portal (112), wherein the communication between the control unit (118) and the building-internal access portal (112) for the purpose of controlling the at least one building-internal electrical component is effected, on a case-by-case basis, either with the involvement of a building-external network (113) or, to shorten the latency, only via a building-internal network (111) by establishing a local control channel (203), involving:
authenticating (501) the control unit (118) to a building-external authentication server (114) via a building-external communication network;
conveying (502) a network address of the building-internal access portal (112) to the control unit (118) by means of the building-external authentication server (114) in the event of successful authentication of the control unit (118) to the building-external authentication server (114) via the building-external communication network (113);
conveying (503) an access authorization to access the building-internal access portal (112) to the control unit (118) by means of the building-external authentication server (114) via the building-external communication network (113) in the event of successful authentication of the control unit (118) to the building-external authentication server (114) via the building external communication network (113); and
establishing (504) a control channel (203) between the control unit (118) and the building-internal access portal (112) in response to reception of the network address (202b) of the building-internal access portal (112) and the access authorization.

2. Method (500) according to Claim 1,
wherein the at least one building-internal electrical component is a controllable actuator or a controllable sensor.

3. Method (500) according to Claim 2,
wherein the controllable actuator is a final control element for one of the following devices in particular:
heating, blinds, alarm system, door lock, light switch, cooker, refrigerator, washing machine, coffee machine, dishwasher, or
wherein the controllable sensor is a temperature sensor, a pressure sensor, a light sensor or a light barrier.

4. Method (500) according to one of the preceding claims,
wherein the network address (202b) and the access authorization are conveyed at the same time or in succession.

5. Method (500) according to one of the preceding claims, involving:
setting up an association (611) between the control unit (118) and the access portal (112) in the building-external authentication server (114) on the basis of a clearance for the control unit (118) to control the at least one building-internal electrical component connected to the building-internal access portal (112).

6. Method (500) according to one of the preceding claims, involving:
controlling the at least one building-internal electrical component connected to the building-internal access portal (112) by means of the control unit (118) via the established local control channel (203).

7. Method (500) according to one of the preceding claims, involving:
controlling the at least one building-internal electrical component connected to the building-internal access portal (112) by means of the control unit (118) via the established local control channel (203) while bypassing the building-external communication network (113).

8. Method (500) according to one of the preceding claims,
wherein the network address (202b) of the building-internal access portal (112) is an IP address, in particular from version IPv4 or IPv6.

9. Method (500) according to one of the preceding claims,
wherein the network address (202b) of the building-internal access portal (112) is in the address space or in the address subspace of the building-internal communication network (111).

10. Method (500) according to one of the preceding claims, involving:
conveying the network address (292b) and the access authorization of the building-internal access portal (112) to the building-external authentication server (114) by means of the building-internal access portal (112); and
storing an association (611) between an identity of the building-internal access portal (112) and the conveyed network address (202b) and the access authorization of the building-internal access portal (112) in a memory of the building-external authentication server (114), in particular in the form of a table.

11. Method (500) according to one of the preceding claims,
wherein the building-internal access portal (112) is a gateway, in particular a home automation gateway, a gateway with router functionality or a router.

12. Method (500) according to one of the preceding claims,
wherein the building-internal access portal (112) provides access to one of the following building-internal networks (111) in particular:
building automation network,
home automation network,
industrial automation network,
smart home network,
smart metering network,
domestic appliance automation network,
consumer electronics automation network,
Internet of Things; and
wherein the building-external communication network (113) is the Internet.

13. Method (500) according to one of the preceding claims,
wherein the control unit is authenticated to the building-external authentication server first via a building-internal communication network and then via the building-external communication network.

14. Method (500) according to one of Claims 1 to 13, wherein the authentication of the control unit (118) on the building-external authentication server (114) via the building-external communication network (113) comprises the following:
conveying (801) a request by the control unit (118) to the building-external authentication server (114) for an access authorization for the building-internal access portal (112), stating an identification of the control unit (118); and
checking (802), by means of the building-external authentication server (114), whether there is, for the identification of the control unit (118), an association (611) with an access authorization for the building-internal access portal (112) in a memory of the building-external authentication server (114),
wherein the authentication is successful if the association (611) of the control unit (118) with the access authorization for the building-internal access portal (112) is in the memory of the building-external authentication server (114).

15. Access portal (112) for at least one building-internal electrical component connected to the access portal (112), comprising:
an access information unit (701) designed to store a network address of the building-internal access portal (112) and an access authorization for the building-internal access portal (112) on an authentication server (114) of a building-external communication network (113); and
a communication interface (702) designed to respond to a request by a control unit (118) to control the at least one building-internal electrical component by establishing a control channel (203) to the control unit (118) if the request comprises the access authorization stored in the authentication server (114), wherein the access portal is designed such that the communication between the control unit (118) and the building-internal access portal (112) for the purpose of controlling the at least one building-internal electrical component is effected, on a case-by-case basis, either with the involvement of a building-external network (113) or, to shorten the latency, only via a building-internal network (111) by establishing a local control channel (203).

16. Access portal (112) according to Claim 15,
wherein the access portal manipulates the control of the at least one building-internal electrical component by the control unit, in particular performs it only at a prescribed time of day or performs it or does not perform it on the basis of other switching processes or device states.

17. Access system (200) for a building-internal communication network (111), comprising:
a building-internal access portal (112) for at least one building-internal electrical component connected to the access portal (112);
an authentication server (114) contactable via a building-external communication network (113); and
a control unit (118) for controlling the at least one building-internal electrical component that, to communicate with the building-internal access portal (112) for the purpose of controlling the at least one electrical component connected thereto, is connectable, on a case-by-case basis, either with the involvement of the building-external network (113) or via a local control channel (203) established via the building-internal network (111),
wherein the building-internal access portal (112) is designed to store a network address of the building-internal access portal (112) and an access authorization for the building-internal access portal (112) on the authentication server (114); and to respond to a request by the control unit (118) by establishing a control channel (203) to the control unit (118) if the request comprises the access authorization stored in the authentication server (114),
wherein the authentication server (114) is designed to respond to a request by the control unit (118) for a network address (202b) of the building-internal access portal (112) and an access authorization for the building-internal access portal (112), with authentication of the control unit (118) on the authentication server (114), by conveying the requested network address (202b) and the requested access authorization to the control unit (118) in the event of successful authentication of the control unit (118) and if an association (611) between the control unit (118) and the building-internal access portal (112) is in the authentication server (114); and
wherein the control unit (118) is designed to request a network address (202b) of the building-internal access portal (112) and an access authorization for the access portal (112) from the authentication server (114) with authentication of the control unit (118) on the authentication server (114); and to take the network address (202b) of the building-internal access portal (112) conveyed by the server (114) as a basis for using the conveyed access authorization to establish a control channel (203) to the building-internal access portal (112) .

## Revendications

1. Procédé (500) pour établir un canal de commande entre un contrôleur (118), destiné à commander au moins un composant électrique interne au bâtiment qui est raccordé à un portail d'accès interne au bâtiment (112), et le portail d'accès interne au bâtiment (112), la communication entre le contrôleur (118) et le portail d'accès interne au bâtiment (112) en vue de commander l'au moins un composant électrique interne au bâtiment s'effectuant, suivant le cas, soit avec la participation d'un réseau externe au bâtiment (113), soit, en vue de raccourcir le temps de latence, uniquement par le biais d'un réseau interne au bâtiment (111) par l'établissement d'un canal de commande local (203), comprenant authentification (501) du contrôleur (118) auprès d'un serveur d'authentification externe au bâtiment (114) par le biais d'un réseau de communication externe au bâtiment ;
communication (502) d'une adresse de réseau du portail d'accès interne au bâtiment (112) par le serveur d'authentification (114) externe au bâtiment au contrôleur (118) en cas d'authentification réussie du contrôleur (118) auprès du serveur d'authentification externe au bâtiment (114) par le biais du réseau de communication externe au bâtiment (113) ;
communication (503) au contrôleur (118) d'une autorisation d'accès pour accéder au portail d'accès interne au bâtiment (112) par le serveur d'authentification externe au bâtiment (114) par le biais du réseau de communication externe au bâtiment (113) en cas d'authentification réussie du contrôleur (118) auprès du serveur d'authentification externe au bâtiment (114) par le biais du réseau de communication externe au bâtiment (113) ; et
établissement (504) d'un canal de commande (203) entre le contrôleur (118) et le portail d'accès interne au bâtiment (112) en réaction à la réception de l'adresse de réseau (202b) du portail d'accès interne au bâtiment (112) et de l'autorisation d'accès.

2. Procédé (500) selon la revendication 1, l'au moins un composant électrique interne au bâtiment étant un actionneur commandable ou un capteur commandable.

3. Procédé (500) selon la revendication 2, l'actionneur commandable étant un organe de commande pour notamment l'un des appareils suivants : stores, système d'alarme, serrure de porte, interrupteur d'éclairage, cuisinière, réfrigérateur, lave-linge, machine à café, lave-vaisselle, ou
le capteur commandable étant une sonde de température, un capteur de pression, un capteur de lumière ou une barrière photoélectrique.

4. Procédé (500) selon l'une des revendications précédentes, l'adresse de réseau (202b) et l'autorisation d'accès étant communiquées l'une après l'autre.

5. Procédé (500) selon l'une des revendications précédentes, comprenant : mise en place d'une association (611) entre le contrôleur (118) et le portail d'accès (112) dans le serveur d'authentification externe au bâtiment (114) en se basant sur une validation du contrôleur (118) pour commander l'au moins un composant électrique interne au bâtiment raccordé au portail d'accès interne au bâtiment (112).

6. Procédé (500) selon l'une des revendications précédentes, comprenant : commande de l'au moins un composant électrique interne au bâtiment raccordé au portail d'accès interne au bâtiment (112) par le contrôleur (118) par le biais du canal de commande local (203) établi.

7. Procédé (500) selon l'une des revendications précédentes, comprenant : commande de l'au moins un composant électrique interne au bâtiment raccordé au portail d'accès interne au bâtiment (112) par le contrôleur (118) par le biais du canal de commande local (203) établi en contournant le réseau de communication externe au bâtiment (113).

8. Procédé (500) selon l'une des revendications précédentes, l'adresse de réseau (202b) du portail d'accès interne au bâtiment (112) étant une adresse IP, notamment de la version IPv4 ou IPv6.

9. Procédé (500) selon l'une des revendications précédentes, l'adresse de réseau (202b) du portail d'accès interne au bâtiment (112) se trouvant dans l'espace d'adresses ou dans le sous-espace d'adresses du réseau de communication interne au bâtiment (111).

10. Procédé (500) selon l'une des revendications précédentes, comprenant :
communication de l'adresse de réseau (292b) et de l'autorisation d'accès du portail d'accès interne au bâtiment (112) par le portail d'accès interne au bâtiment (112) au serveur d'authentification externe au bâtiment (114) ; et
enregistrement d'une association (611) entre une identité du portail d'accès interne au bâtiment (112) et de l'adresse de réseau (202b) et de l'autorisation d'accès communiquées du portail d'accès interne au bâtiment (112) dans une mémoire du serveur d'authentification externe au bâtiment (114), notamment sous la forme d'une table.

11. Procédé (500) selon l'une des revendications précédentes, le portail d'accès interne au bâtiment (112) étant une passerelle, notamment une passerelle d'automatisation d'habitat, une passerelle avec fonctionnalité de routeur ou un routeur.

12. Procédé (500) selon l'une des revendications précédentes, le portail d'accès interne au bâtiment (112) accordant l'accès notamment à l'un des réseaux internes au bâtiment (111) suivants :
réseau d'automatisation de bâtiment,
réseau d'automatisation d'habitat,
réseau d'automatisation industrielle,
réseau de maison intelligente,
réseau de télérelevé de compteur,
réseau d'automatisation d'appareils ménagers,
réseau d'automatisation d'électronique de loisir,
Internet des objets ; et
le réseau de communication externe au bâtiment (113) étant l'Internet.

13. Procédé (500) selon l'une des revendications précédentes, l'authentification du contrôleur auprès du serveur d'authentification externe au bâtiment s'effectuant tout d'abord par le biais d'un réseau de communication interne au bâtiment et ensuite par le biais du réseau de communication externe au bâtiment.

14. Procédé (500) selon l'une des revendications 1 à 13, l'authentification du contrôleur (118) auprès du serveur d'authentification externe au bâtiment (114) par le biais du réseau de communication externe au bâtiment (113) comprenant ce qui suit :
communication (801) d'une demande du contrôleur (118) au serveur d'authentification externe au bâtiment (114) pour une autorisation d'accès pour le portail d'accès interne au bâtiment (112) en indiquant l'identification du contrôleur (118) ; et
contrôle (802) par le serveur d'authentification externe au bâtiment (114) si, à propos de l'identification du contrôleur (118), une association (611) à une autorisation d'accès pour le portail d'accès interne au bâtiment (112) est présente dans une mémoire du serveur d'authentification externe au bâtiment (114),
l'authentification étant réussie lorsque l'association (611) du contrôleur (118) à l'autorisation d'accès pour le portail d'accès interne au bâtiment (112) est présente dans la mémoire du serveur d'authentification externe au bâtiment (114).

15. Portail d'accès (112) pour au moins un composant électrique interne au bâtiment qui est raccordé au portail d'accès (112), comprenant :
une unité d'informations d'accès (701), qui est conçue pour stocker une adresse de réseau du portail d'accès interne au bâtiment (112) et une autorisation d'accès pour le portail d'accès interne au bâtiment (112) auprès d'un serveur d'authentification externe au bâtiment (114) d'un réseau de communication externe au bâtiment (113) ; et
une interface de communication (702), qui est conçue pour, en réaction à une demande d'un contrôleur (118) pour commander l'au moins un composant électrique interne au bâtiment, établir un canal de commande (203) vers le contrôleur (118) dans le cas où la demande comprend l'autorisation d'accès stockée dans le serveur d'authentification (114), le portail d'accès étant conçu de telle sorte que la communication entre le contrôleur (118) et le portail d'accès interne au bâtiment (112) en vue de commander l'au moins un composant électrique interne au bâtiment s'effectue, suivant le cas, soit avec la participation d'un réseau externe au bâtiment (113), soit, en vue de raccourcir le temps de latence, uniquement par le biais d'un réseau interne au bâtiment (111) par l'établissement d'un canal de commande local (203) .

16. Portail d'accès (112) selon la revendication 15, le portail d'accès manipulant la commande de l'au moins un composant électrique interne au bâtiment par le contrôleur, notamment en l'exécutant seulement à une heure prédéfinie ou en l'exécutant ou ne l'exécutant pas en fonction d'autres opérations de commutation ou d'états d'appareils.

17. Système d'accès (200) pour un réseau de communication interne au bâtiment (111), comprenant :
un portail d'accès interne au bâtiment (112) pour au moins un composant électrique interne au bâtiment qui est raccordé au portail d'accès interne au bâtiment (112) ;
un serveur d'authentification (114) joignable par le biais d'un réseau de communication externe au bâtiment (113) ; et
un contrôleur (118) destiné à commander l'au moins un composant électrique interne au bâtiment et qui, pour une communication avec le portail d'accès interne au bâtiment (112) en vue de commander l'au moins un composant électrique interne au bâtiment peut être relié, suivant le cas, soit avec la participation du réseau externe au bâtiment (113), soit par le biais d'un canal de commande local (203) établi uniquement par le biais du réseau interne au bâtiment (111),
le portail d'accès interne au bâtiment (112) étant conçu pour stocker une adresse de réseau du portail d'accès interne au bâtiment (112) et une autorisation d'accès pour le portail d'accès interne au bâtiment (112) auprès du serveur d'authentification (114) ; et
en réaction à une demande d'un contrôleur (118), établir un canal de commande (203) vers le contrôleur (118) lorsque la demande comprend l'autorisation d'accès stockée dans le serveur d'authentification (114),
le serveur d'authentification (114) étant conçu pour, en réaction à une demande du contrôleur (118) pour une adresse de réseau (202b) du portail d'accès interne au bâtiment (112) et une autorisation d'accès pour le portail d'accès interne au bâtiment (112) en authentifiant le contrôleur (118) auprès du serveur d'authentification (114), communiquer au contrôleur (118) l'adresse de réseau (202b) demandée et l'autorisation d'accès demandée en cas d'authentification réussie du contrôleur (118) et en cas de présence d'une association (611) entre le contrôleur (118) et le portail d'accès interne au bâtiment (112) dans le serveur d'authentification (114) ; et
le contrôleur (118) étant conçu pour demander, auprès du serveur d'authentification (114), une adresse de réseau (202b) du portail d'accès interne au bâtiment (112) et
une autorisation d'accès pour le portail d'accès interne au bâtiment (112) en authentifiant le contrôleur (118) auprès du serveur d'authentification (114) ; et
en se basant sur l'adresse de réseau (202b) du portail d'accès interne au bâtiment (112) communiquée par le serveur (114), en utilisant l'autorisation d'accès communiquée, établir un canal de commande (203) avec le portail d'accès interne au bâtiment (112).
